# EUROPÄISCHE PATENTSCHRIFT

(11) **EP 2 145 225 B1**
(45) Veröffentlichungstag und Bekanntmachung des Hinweises auf die Patenterteilung: **11.12.2019**
(21) Anmeldenummer: 08735388.4
(22) Anmeldetag: 24.04.2008
(51) Int. Cl.: G02C 7/02, G02C 7/06, G02C 13/00

(54) **BRILLE, VERFAHREN ZUR HERSTELLUNG UND COMPUTERPROGRAMMPRODUKT**
SPECTACLES, METHOD FOR PRODUCTION AND COMPUTER PROGRAM PRODUCT
LUNETTES, PROCÉDÉ DE FABRICATION ET PRODUIT-PROGRAMME INFORMATIQUE

(30) Priorität: 27.04.2007 DE 102007020031
(43) Veröffentlichungstag der Anmeldung: 20.01.2010
(73) Patentinhaber: Rodenstock GmbH, 80687 München (DE)
(72) Erfinder: ESSER, Gregor, 81735 München (DE); ZIMMERMANN, Martin, 85253 Erdweg-Kleinberghofen (DE); SCHWARZ, Ilka, 82538 Geretsried (DE)
(74) Vertreter: Müller-Boré & Partner Patentanwälte PartG mbB
(86) Internationale Anmeldenummer: PCT/EP2008/003336
(87) Internationale Veröffentlichungsnummer: WO 2008/135178

(56) Entgegenhaltungen:
- EP-A- 0 347 917
- EP-A- 0 576 268
- EP-A- 0 843 193
- DE-A1-102004 059 448
- US-A- 4 524 419

## Beschreibung

Die vorliegende Erfindung betrifft eine Brille, ein Verfahren zum Herstellen einer Brille und ein Computerprogrammprodukt.

### Stand der Technik

Herkömmlicherweise ist bei konventionellen Gleitsichtgläsern eine Fläche, zumeist die Vorderfläche, progressiv. Die verbleibende Fläche, d.h. die Rückfläche ist regelmäßig eine sphärische oder torische Rezeptfläche. Weiterhin kann die Rückfläche atorisch gestaltet sein, um individuelle Parameter bei der Korrektur einer Fehlsichtigkeit eines Benutzers zu berücksichtigen. Insbesondere können konventionelle individuelle Progressivgläser eine einfache Vorderfläche und eine progressive Rückfläche bzw. Rezeptfläche aufweisen. Die Vorderfläche ist hierbei regelmäßig aus Kostengründen entweder eine sphärische, torische oder eine rotationssymmetrische, asphärische Fläche. Weiterhin sind Brillengläser bekannt, bei denen sowohl die Vorder- als auch die Rückfläche progressiv ist.

Weiterhin herkömmlicherweise wird die zweite Fläche, d.h. die nicht progressive Fläche, entweder sehr einfach gestaltet oder zur Verbesserung der Abbildungseigenschaften verwendet. Die zweite Fläche kann auch gemäß vorgegebener optischer Eigenschaften bzw. einer vorgegebenen optischen Wirkung hergestellt werden.

Die EP 0 576 268 A1 zeigt ein Brillenglaslieferverfahren für ein System, das ein Teminal, das auf einer Gläserbestellerseite installiert ist, und eine Rechenanlage, die auf einer Gläserverarbeiterseite installiert ist und über eine Kommunikationsleitung mit dem Terminal verunden ist, beinhaltet, zur Lieferung von Brillengläsern. Bei dem Verfahren werden in einem ersten Schritt Daten zu den Verarbeitungsbedingungen vom Terminal zur Rechenanlage übermittelt, in einem zweiten Schritt wird eine gewünschte Glasform berechnet, in einem dritten Schritt wird eine Information über die Annahme oder Zurückweisung bezüglich der Frage, ob eine Glasverarbeitung möglich ist erzeugt und an das Terminal übermittelt, und in einem vierten Schritt wird die übermittelte Information angezeigt.

Die EP 0 843 193 A2 betrifft ein Verfahren zum Festlegen von Brillengestellformen, um Formen von rechten und linken Gestellfassungen beinahe symmetrisch miteinander zusammenzupassen. Dazu wird die Form einer linken und einer rechten Gestellfassung des Brillengestells vermessen.

Die US 4,524,419 beschreibt ein Verfahren zum Einstellen optimaler Werkzeugeinstellungen bei der Herstellung eines Brillenglases, bei dem eine Begrenzung des Brillenglases mathematisch auf eine Ebene projiziert wird.

Die DE 10 2004 059 448 A1 offenbart ein Verfahren und eine Vorrichtung zum Fertigen eines Brillenglases unter Vorgabe einer Brückenweite, einer Scheibenlänge, eines Fassungsscheibenwinkels, einer Basiskurve, einer nasalen und temporalen Facettenlage sowie einer Pupillendistanz des Benutzers.

Die EP 0 347 917 A1 offenbart ein Brillenglas mit einer vorderen und einer augenseitigen Begrenzungsfläche sowie mit einem sich ändernden Brechungsindex, der zur Korrektur der Abbildungsfehler beiträgt. Das Brillenglas zeichnet sich durch wenigstens eine Schar von Niveauflächen mit konstantem Brechungsindex aus, die in Richtung ihrer Flächennormalen in allen Punkten jeweils gleichen Abstand haben, und die bzw. deren Verlängerung die Achse, die die Glasscheitel der Vorderfläche und der augenseitigen Fläche verbindet, schneiden.

### Begriffsbestimmungen

Vor der nachfolgenden, detaillierten Darstellung der Erfindung werden Begriffe definiert bzw. beschrieben, welche zum Verständnis der Erfindung beitragen.
- Eine **herkömmliche Gebrauchsstellung** einer Brille umfaßt beispielsweise Parameter, anhand welcher die Position einer Brille bzw. der Brillengläser der Brille vor dem bzw. den Auge(n) des Brillenträgers beschreibbar bzw. feststellbar und/oder bestimmbar ist. In anderen Worten umfaßt eine herkömmliche Gebrauchsstellung sämtliche Parameter bzw. Eigenschaften, wie eine Brille vor dem bzw. den Auge(n) des Benutzers der Brille angeordnet wird, so daß die Brille die verordnete Wirkung aufweist. Zusätzlich kann die Gebrauchsstellung physiologische Daten des Benutzers der Brille umfassen, welche insbesondere bei der Herstellung des Brillenglases bzw. der Brille berücksichtigt werden.

Die Gebrauchsstellung bzw. Gebrauchsposition kann beispielsweise eine individuelle Gebrauchsposition oder eine standardisierte Gebrauchsposition sein. Bei Verwendung der Brillenfassung bzw. der Brille gemäß einer standardisierten Gebrauchsstellung beträgt der Augendrehpunktabstand etwa 26,5 mm oder etwa 27,4 mm oder etwa 27,9 mm oder etwa 28,5 mm oder etwa 28,8 mm, die Vorneigung, d.h. der pantoskopische Winkel beträgt etwa 7° bis etwa 9° insbesondere etwa 8°, der Fassungsscheibenwinkel beträgt etwa 0° bis etwa 5°, die Pupillendistanz beträgt etwa 63 mm bis etwa 64 mm, der Hornhautscheitelabstand beträgt etwa 13 mm bis etwa 15 mm, die Objektentfernung im Fernbezugspunkt beträgt etwa 0 dpt und die Objektentfernung im Nahbezugspunkt beträgt etwa -2,5 dpt.

Insbesondere beträgt bei einer Verwendung der Brillenfassung bzw. der Brille gemäß einer standardisierten Gebrauchsstellung der Augendrehpunktabstand etwa 26,5 mm, die Vorneigung, d.h. der pantoskopische Winkel etwa 9°, der Fassungsscheibenwinkel etwa 5°, die Pupillendistanz etwa 64 mm und der Hornhautscheitelabstand beträgt etwa 13 mm.

Alternativ beträgt bei einer Verwendung der Brillenfassung bzw. der Brille gemäß einer standardisierten Gebrauchsstellung der Augendrehpunktabstand etwa 28,5 mm, die Vorneigung, d.h. der pantoskopische Winkel etwa 7°, der Fassungsscheibenwinkel etwa 0°, die Pupillendistanz etwa 63 mm und der Hornhautscheitelabstand beträgt etwa 15 mm.

Alternativ beträgt bei einer Verwendung der Brillenfassung bzw. der Brille gemäß einer standardisierten Gebrauchsstellung der Augendrehpunktabstand etwa 25 mm, die Vorneigung, d.h. der pantoskopische Winkel etwa 8°, der Fassungsscheibenwinkel etwa 5°, die Pupillendistanz etwa 64 mm und der Hornhautscheitelabstand beträgt etwa 13 mm.

Alternativ beträgt bei einer Verwendung der Brillenfassung bzw. der Brille gemäß einer standardisierten Gebrauchsstellung der Augendrehpunktabstand etwa 27,5 mm, die Vorneigung, d.h. der pantoskopische Winkel etwa 11°, der Fassungsscheibenwinkel etwa 0°, die Pupillendistanz etwa 65 mm und der Hornhautscheitelabstand beträgt etwa 14 mm.

Bei Verwendung einer individuellen Gebrauchsposition sind die Parameter individuell angegeben. In anderen Worten sind der Augendrehpunktabstand, die Vorneigung, d.h. der pantoskopische Winkel, der Fassungsscheibenwinkel, die Pupillendistanz und der Hornhautscheitelabstand für den jeweiligen Benutzer der Brillenfassung bzw. der Brille vorgegeben und/oder werden für den Benutzer bestimmt. Somit kann sich die individuelle Gebrauchsposition von der standardisierten Gebrauchsposition zumindest teilweise unterscheiden. Die individuelle Gebrauchsposition und die standardisierte Gebrauchsposition können aber auch identisch sein.
- Eine **Fassungsrandkurve** der Brillenfassung kann beispielsweise jene Kurve sein, welche das Sichtfeld eines Brillenglases begrenzt. In anderen Worten ist das Brillenglas bzw. sind beide Brillengläser derart in bzw. an der Brillenfassung angeordnet, daß das Brillenglas bzw. die Brillengläser von der Brillenfassung gehalten werden. Die Fassungsrandkurve der Brillenfassung sind daher diejenigen, insbesondere zusammenhängenden Bereiche der Brillenfassung, welche den Durchblickbereich eines Brillenglases begrenzen. Hierbei kann beispielsweise die Brillenfassung auch zumindest teilweise transparent sein, d.h. es ist auch möglich durch die Brillenfassung selbst hindurch zu blicken.

Die Fassungsrandkurve der Brillenfassung kann auch der Bereich der Brillenfassung sein, welcher das Brillenglas kontaktiert.

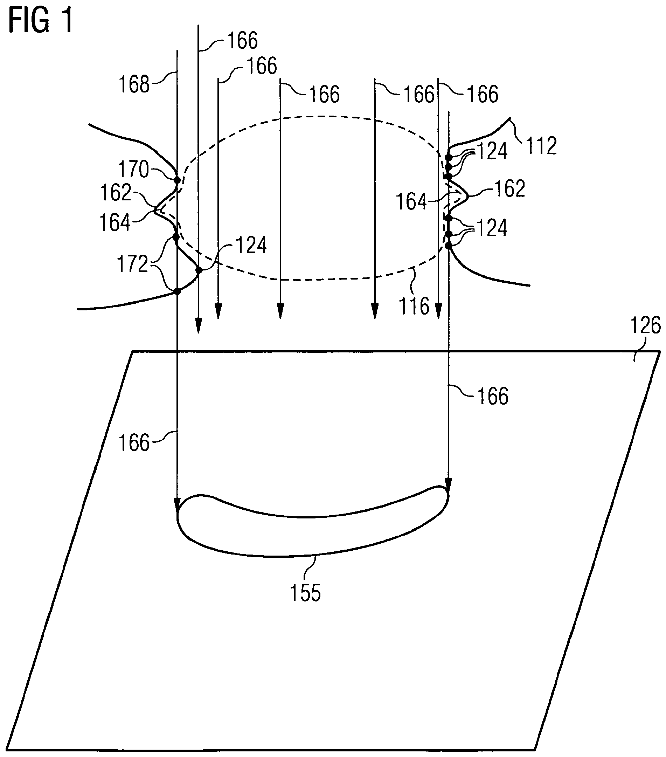

Die Fassungsrandkurve kann auch durch eine vorgegebene Projektion bestimmt bzw. bestimmbar sein. Insbesondere kann die Fassungsrandkurve eine Kurve bzw. ein Gebilde im dreidimensionalen Raum sein, die bzw. das anhand von Projektionsstrahlen bestimmt ist bzw. wird, wie nachfolgend anhand von Figur 1 beispielhaft beschrieben. Figur 1 zeigt eine Schnittansicht eines Teils bzw. Bereichs einer Brillenfassung 112 mit daran angeordnetem Brillenglas 116 insbesondere linkem Brillenglas 116. Das Brillenglas 116 ist anhand unterbrochener Linien dargestellt. Das Brillenglas 116 hat eine objektseitige Fläche 138 und eine augenseitige Fläche 122. Beispielhaft weist die Brillenfassung 112 eine Vertiefung 162 in Form einer Nut 162 auf. Ein Rand 164 des Brillenglases 116 greift in die Nut 162 ein, wodurch das Brillenglas 116 in bzw. an der Brillenfassung 112 gehalten wird.

Weiterhin sind in Figur 1 Projektionsstrahlen 166 dargestellt. Die Projektionsstrahlen 166 sind beispielsweise Strahlen, die parallel zu einem Normalenvektor einer ersten Schnittlinie (siehe unten) in dem vorgegebenen Symmetriebezugspunkt (siehe unten) sind. Projektionsstrahlen 166 können auch parallel zu der ersten linken Ebene (siehe unten) sein und parallel zu der zweiten linken Ebene (siehe unten) sein. Gleiches kann sinngemäß für das rechte Brillenglas (siehe unten) gelten. Weiterhin ist in Figur 1 ein Schnitt durch eine Fassungsrandkurve 124 dargestellt. Die Fassungsrandkurve 124 ist eine dreidimensionale Struktur. Die Fassungsrandkurve 124 kann insbesondere alle Punkte einer Oberfläche der Brillenfassung 112 beinhalten, die von parallelen Projektionsstrahlen 166 berührt werden. In anderen Worten umfaßt die Fassungsrandkurve 124 alle Punkte der Oberfläche der Brillenfassung 112, welche von parallelen Projektionsstrahlen 166 berührt werden, wobei die Projektionsstrahlen 166 die Brillenfassung 112 nicht schneiden. In dem linken Bereich der Schnittansicht von Figur 1 umfaßt die Fassungsrandkurve 124 lediglich einen Punkt, wie dies in der Bildebene bzw. Zeichenebene der Figur 1 links dargestellt ist. Strahlen, die zwar parallel zu Projektionsstrahlen 166 sind und die Oberfläche der Brillenfassung 112 an einem Punkt berühren und/oder in zumindest einem weiteren Punkt die Oberfläche der Brillenfassung 112 schneiden sind keine Projektionsstrahlen. Beispielhaft ist dies anhand der Linie 168 dargestellt, die zwar parallel zu den Projektionslinien 166 ist und die Brillenfassung 112 berührt (Berührpunkt 170), jedoch die Brillenfassung 112 auch schneidet (Schnittpunkte 172). Die Linie 168 unterscheidet sich somit von den Projektionslinien bzw. -strahlen 166, welche die Brillenfassung 112 nicht schneiden, sondern die Oberfläche der Brillenfassung 112 ausschließlich berühren.

Weiterhin ist in Figur 1 eine beispielhafte Projektion 155 der Fassungsrandkurve 124 auf eine beispielhafte Ebene 126 dargestellt. Die Projektion 155 ist die zweidimensionale Darstellung der dreidimensionalen Fassungsrandkurve 124. Die beispielhafte Ebene kann eine erste linke Ebene, eine zweite linke Ebene, eine erste rechte Ebene, eine zweite rechte Ebene usw. sein.
- Der Begriff **"Schnittlinie"** einer Fläche eines Brillenglases mit einer Ebene umfaßt inhaltlich auch "Durchbiegung" bzw. "Krümmung" eines Brillenglases in dieser Ebene. Insbesondere entspricht der Begriff "Krümmung" einer Schnittlinie mit einem bestimmten Krümmungsradius, wobei der Krümmungsradius über die Länge der Schnittlinie auch variieren kann. Die Schnittlinie kann daher die Durchbiegung bzw. die Krümmung der Oberfläche, beispielsweise der objektseitigen Oberfläche und/oder der augenseitigen Oberfläche des Brillenglases im Querschnitt beschreiben.
- Eine **augenseitige Fläche** des Brillenglases ist eine Fläche des Brillenglases, insbesondere eine Fläche mit optischer Wirkung, welche bei einer herkömmlichen Gebrauchsposition der Brille dem Auge gegenüberliegt. In anderen Worten ist die augenseitige Fläche des Brillenglases die Fläche des Brillenglases, welche auf der Seite der Brillenfassung liegt, an der vorzugsweise ein Bügelgelenk an der Brillenfassung angeordnet ist. Insbesondere kann es möglich sein, die Bügel auf einer Seite der Brillenfassung zu öffnen und zu schließen. Die augenseitige Fläche des Brillenglases ist die Fläche des Brillenglases, welche auf dieser Seite liegt bzw. an diese Seite angrenzt.
- Eine **objektseitige Fläche** des Brillenglases ist die Fläche des Brillenglases, insbesondere eine Fläche mit optischer Wirkung, welche in einer herkömmlichen Gebrauchsposition der Brille einem betrachteten Objekt gegenüberliegt. Ein Brillenglas weißt regelmäßig zwei Flächen auf. Insbesondere weißt ein Brillenglas regelmäßig zwei optische Flächen auf, die sich gegenüber liegen, wobei eine Fläche die augenseitige Fläche ist und die andere, verbleibende Fläche die objektseitige Fläche ist. Die objektseitige Fläche des Brillenglases ist somit die verbleibende Fläche der beiden Flächen eines Brillenglases.

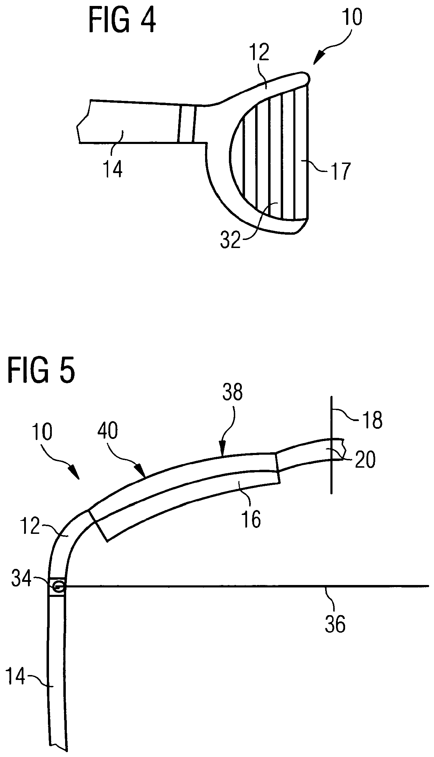

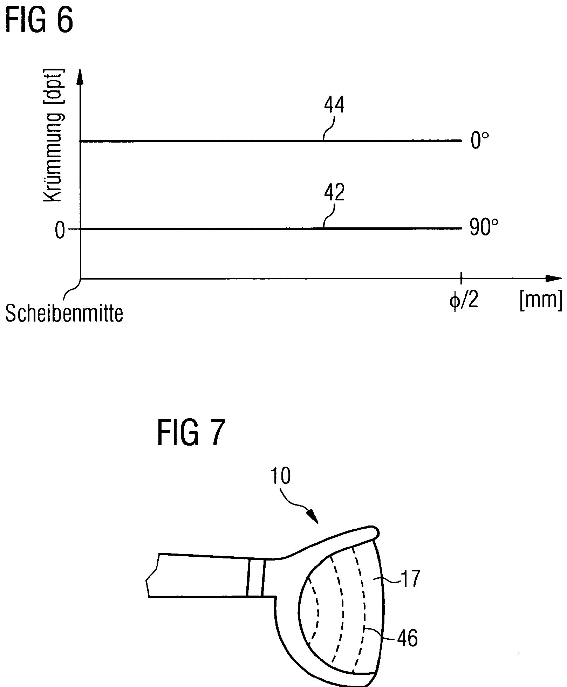

Anders ausgedrückt ist eine Brille regelmäßig dazu ausgelegt, ein Objekt zu betrachten, d.h. ausgehend von dem Objekt treten Lichtstrahlen durch die Brillengläser der Brille hindurch und treten in ein Auge oder beide Augen ein. Die objektseitige Fläche des Brillenglases ist somit die Fläche des Brillenglases, durch welche Lichtstrahlen, ausgehend von dem zu betrachtenden Objekt, in das Brillenglas eintreten. Die augenseitige Fläche des Brillenglases ist diejenige Fläche, durch welche diese Lichtstrahlen aus dem Brillenglas austreten und gegebenenfalls zumindest teilweise in ein Auge eintreten.
- Unter einer Bemaßung im **"Kastenmaß"** wird im Sinne dieser Erfindung das Maßsystem verstanden, wie es in einschlägigen Normen, beispielsweise in der DIN EN ISO 8624 und/oder der DIN EN ISO 1366 DIN und/oder der DIN 58 208 und/oder der DIN 5340, beschrieben wird. Ferner wird hinsichtlich des Kastenmaßes und weiterer verwendeter herkömmlicher Begriffe und Parameter auf das Buch "Die Optik des Auges und der Sehhilfen" von Dr. Roland Enders, 1995 Optische Fachveröffentlichung GmbH, Heidelberg, sowie das Buch "Optik und Technik der Brille" von Heinz Diepes und Ralf Blendowske, 2002 Verlag Optische Fachveröffentlichungen GmbH, Heidelberg, verwiesen. Ebenso wird auch auf die Broschüre "inform fachberatung für die augenoptik" PR-Schriftenreihe des ZVA für den Augenoptiker, Heft 9, "Brillenzentrierung", ISBN 3-922269-23-0, 1998 verwiesen, in welcher das Kastenmaß insbesondere in Figuren 5 und 6 beispielhaft dargestellt ist. Weiterhin wird auch auf das Buch "Brillenanpassung Ein Schulbuch und Leitfaden" von Wolfgang Schulz und Johannes Eber 1997, DOZ-Verlag, herausgegeben vom Zentralverband der Augenoptiker, Düsseldorf, ISBN 3-922269-21-4 verwiesen, insbesondere auf Punkte 1.3, 1.4. und 1.5 und die zugehörigen Abbildungen. Die Normen, die genannte Broschüre sowie die genannten Bücher stellen für die Begriffsdefinitionen insoweit einen integralen Offenbarungsbestandteil der vorliegenden Anmeldung dar.

Die Begrenzung nach einer Bemaßung im Kastenmaß umfaßt beispielsweise Fassungspunkte für ein Auge oder beide Augen, welche am weitesten außen bzw. innen und/oder oben bzw. unten liegen. Diese Fassungspunkte werden herkömmlicherweise anhand von Tangenten an die Brillenfassung bzw. den jeweiligen Augen zugeordneten Bereichen der Brillenfassung bestimmt (vgl. DIN 58 208; Bild 3).

Insbesondere ist das Kastenmaß ein ein Brillenglas umschreibendes Rechteck in der Scheibenebene. Gemäß oben genannter Normen wird zur Bestimmung der Scheibenebene mathematisch von einer Ebene mit dem Normalenvektor des Kreuzprodukts von Mittelparallele/-horizontale des Kastens ausgegangen. Näherungsweise läßt sich die Normale der Scheibenebene aus dem Kreuzprodukt des Vektors zwischen dem nasalen Punkt und dem temporalen Punkt sowie dem Vektor zwischen dem oberen und dem unteren Punkt des Glasrandes zur Fassung bestimmen. Vorteilhafterweise entsprechen hier die Vorneigung und der Fassungsscheibenwinkel am besten der Durchblicksituation.

Der **"Haltepunkt"** für die Scheibenebene wird folgendermaßen genähert: Ausgangspunkt ist die Mitte des Vektors zwischen dem oberen und dem unteren Punkt. Anschließend wird horizontal entlang dem Vektor zwischen nasalem Punkt und temporalen Punkt in der Mitte der Scheibe (genähert durch die x-Koordinate) gefolgt. Das Kreuzprodukt aus dem Vektor zwischen den Mitten der Scheibenebenen beider Seiten und dem Mittelwert der beiden Vektoren aus oberem und unterem Fassungspunkt bestimmt die Normale der Fassungsebene. Haltepunkt ist eine der Scheibenmitten.

Das Kastenmaß wird als senkrechte Projektion des Scheibenrandes auf die Scheibenebene bestimmt. Der Fassungsscheibenwinkel kann nun sogar für jede Seite als der Winkel zwischen der jeweiligen Scheibenebene und der Fassungsebene bestimmt werden.

In anderen Worten läßt sich die Normale der Scheibenebene aus dem Kreuzprodukt des Vektors zwischen dem nasalen und dem temporalen Schnittpunkt einer horizontalen Ebene durch die Gerade der Nullblickrichtung mit dem jeweiligen Glasrand zur Fassung sowie dem Vektor zwischen dem oberen und dem unteren Schnittpunkt einer vertikalen Ebene durch die Gerade Nullblickrichtung mit den jeweiligen Glasrand zur Fassung bestimmen.
- Ein **"Zentrierpunkt"** kann ein Punkt sein, mit dem der optische Mittelpunkt, der Konstruktionsbezugspunkt oder der Anpaßpunkt zusammenfallen soll/sollen bzw. zusammen fällt/fallen, wenn kein verordnetes Prisma oder Dickenreduktionsprisma vorhanden ist oder wenn solche Prismen neutralisiert worden sind.
- Ein **"Prismenzentrierpunkt"** bzw. der "Prismenbezugspunkt" ist bei einem Gleitsichtbrillenglas bzw. einem Progressivbrillenglas oder einem Gleitsichtbrillenglashalbfertigprodukt ein Punkt, insbesondere auf der Vorderfläche, in bzw. an dem die prismatischen Wirkungen bestimmt werden müssen.
- Ein **"Anpaßpunkt"** ist ein Punkt, insbesondere auf der Vorderfläche eines Brillenglases oder Brillenglashalbfertigprodukts, der nach Angabe des Herstellers als Bezugspunkt für die Positionierung des Brillenglases vor dem Auge dienen soll bzw. dient. In anderen Worten ist der Anpaßpunkt ein vorgegebener bzw. vorbestimmter Punkt des Brillenglases, anhand welchem das Brillenglas in der Brillenfassung positioniert bzw. daran angeordnet wird.
- Ein **"Fernbezugspunkt"** ist beispielsweise ein Punkt, insbesondere auf der progressiven Fläche des Brillenglases, beispielsweise der augenseitigen Fläche des Brillenglases, in bzw. an dem die dioptrische Wirkung für das Fernteil, d.h. zum Sehen in die Ferne erreicht wird.
- Ein **"Nahbezugspunkt"** ist beispielsweise ein Punkt, insbesondere auf der progressiven Fläche des Brillenglases, beispielsweise der augenseitigen Fläche des Brillenglases, in bzw. an dem die dioptrische Wirkung für das Nahteil, d.h. zum Sehen in die Nähe erreicht wird.
- Ein **"Fernkonstruktionsbezugspunkt"** ist ein Punkt, insbesondere auf der progressiven Fläche des fertigen Brillenglases, beispielsweise der augenseitigen Fläche des Brillenglases oder der fertig bearbeiteten Fläche eines Brillenglashalbfertigprodukts, in bzw. an dem nach Angabe des Herstellers die Konstruktionssollwerte für das Fernteil, d.h. zum Sehen in die Ferne, vorliegen.
- Ein **"Nahkonstruktionsbezugspunkt"** ist ein Punkt, insbesondere auf der progressiven Fläche des fertigen Brillenglases, beispielsweise der augenseitigen Fläche des Brillenglases oder der fertig bearbeiteten Fläche eines Brillenglashalbfertigprodukts, in bzw. an dem nach Angabe des Herstellers die Konstruktionssollwerte für das Nahteil, d.h. zum Sehen in die Nähe, vorliegen.
- Ein **"optischer Mittelpunkt"** des Brillenglases kann insbesondere der Schnittpunkt der optischen Achse mit der objektseitigen bzw. der augenseitigen Fläche des Brillenglases sein.
- Eine **"Meridianebene"** einer Fläche kann jede Ebene sein, welche den/die Krümmungsmittelpunkt(e) der Fläche enthält bzw. enthalten. Alternativ/zusätzlich kann die Meridianebene eines Brillenglases jede Ebene sein, welche die optische Achse des Brillenglases enthält. Eine optische Achse kann eine Gerade sein, welche zu beiden optischen Flächen eines Brillenglases senkrecht ist und entlang welcher Licht das Brillenglas unabgelenkt durchtritt. Beispielsweise kann bei einer asphärischen Fläche die Rotationsachse die einzige Symmetrieachse sein. Eine optische Achse liegt insbesondere vor, wenn der Krümmungsmittelpunkt der zweiten Fläche auf der vorgenannten Achse liegt.

Die Begriffe "Meridianebene" und "Meridionalbene" können synonym verwendet werden.
- Eine **"Schnittlinie"** kann eine Schnittansicht einer Fläche eines Brillenglases, beispielsweise der objektseitigen oder augenseitigen Fläche des Brillenglases bei einem Schnitt einer Ebene, z.B. der ersten linken Ebene mit dem Brillenglas sein. Die erste linke Schnittlinie kann beispielsweise durch Schnitt der ersten linken Ebene mit der Vorderfläche, d.h. der objektseitigen Fläche des Brillenglases hergestellt werden.
- Eine **"Vorderfläche"** eines Brillenglases kann eine objektseitige Fläche des Brillenglases sein.
- Eine **"Rückfläche"** eines Brillenglases kann eine augenseitige Fläche des Brillenglases sein. Die Vorderfläche und die Rückfläche können gegenüberliegende Flächen eines Brillenglases sein. Insbesondere sind die Vorderfläche und die Rückfläche die Flächen des Brillenglases, anhand welcher die optische(n) Wirkung(en) des Brillenglases erreicht werden.
- **"Bestimmen** einer Fassungsrandkurve" umfaßt insbesondere den Schritt, eine Fassungsrandkurve zumindest teilweise anhand eines Meßgeräts zu vermessen. Alternativ oder zusätzlich kann die Fassungsrandkurve auch zumindest teilweise einer Datenbank entnommen werden bzw. zumindest teilweise von einem Benutzer manuell vorgegeben werden. Insbesondere kann hierzu eine standardisierte Randkurve verwendet werden. Die Fassungsradnkurve kann auch zumindest teilweise berechnet werden, wenn die Topoligie der Brillenfassung zumindest teilweise bekannt ist.
- Ferner wird bei den verwendeten Fachbegriffen zusätzlich zu die einschlägigen Normen DIN EN ISO 8624, der DIN 58208, DIN EN ISO 13666, der DIN 5340 und der DIN EN ISO 8980-2 verwiesen. Weiterhin wird bei den verwendeten Fachbegriffen zusätzlich zu den genannten Normen weiterhin auf Definitionen in dem Fachbuch "Die Optik des Auges und der Sehhilfen" von Dr. Roland Enders, 1995 Optische Fachveröffentlichung GmbH, Heidelberg, sowie in dem Fachbuch "Optik und Technik der Brille" von Heinz Diepes und Ralf Blendowske, 2002 Verlag Optische Fachveröffentlichungen GmbH, Heidelberg, verwiesen. Die Normen sowie die genannten Bücher stellen für die Begriffsdefinitionen insoweit einen integralen Offenbarungsbestandteil der vorliegenden Beschreibung der Erfindung dar.

### Aufgabe der Erfindung

Es ist eine Aufgabe der vorliegenden Erfindung, eine Brille mit verbesserten kosmetischen Eigenschaften bereitzustellen. Diese Aufgabe wird gelöst anhand des Verfahrens gemäß Anspruch 1 und anhand des Computerprogrammprodukts gemäß Anspruch 6. Bevorzugte Ausführungsformen sind Gegenstand der abhängigen Ansprüche.

### Brille gemäß einem Aspekt

Ein Aspekt betrifft eine Brille mit einer Brillenfassung, einem ersten progressiven Brillenglas, nachfolgend als linkes Brillenglas bezeichnet, und einem zweiten progressiven Brillenglas, nachfolgend als rechtes Brillenglas bezeichnet, wobei
- das linke Brillenglas derart an der Brillenfassung angeordnet ist, daß das linke Brillenglas von einer linken Fassungsrandkurve der Brillenfassung zumindest teilweise umgrenzt ist,
- jedes Brillenglas zwei gegenüberliegende Flächen aufweist, wobei eine Fläche nachfolgend als augenseitige Fläche und die andere Fläche nachfolgend als objektseitige Fläche bezeichnet ist,
- die objektseitige Fläche des linken Brillenglases ausgebildet ist, daß
   -- eine erste linke Ebene die objektseitige Fläche des linken Brillenglases entlang einer ersten linken Schnittlinie schneidet,
   -- die erste linke Schnittlinie von einer Projektion der linken Fassungsrandkurve auf die erste linke Ebene einen maximalen Abstand und einen minimalen Abstand aufweist,
   -- die Differenz zwischen dem maximalen Abstand und dem minimalen Abstand geringer als ein vorgegebener Grenzwert ist, wobei
   -- der vorgegebene Grenzwert etwa 3 mm, bevorzugt etwa 1 mm, bevorzugt etwa 0,2 mm, besonders bevorzugt etwa 0,1 mm ist,
   -- die erste linke Ebene parallel zu einer Symmetrieebene der Brillenfassung ist und das linke Brillenglas in einem vorgegebenen Schnittpunkt schneidet und wobei
   -- der vorgegebene Schnittpunkt ein Punkt aus der Menge der folgenden Punkte des linken Brillenglases ist:
      Zentrierpunkt, Prismenzentrierpunkt, Anpaßpunkt, Fernbezugspunkt, Nahbezugspunkt, geometrischer Mittelpunkt des linken Brillenglases im Kastenmaß oder ein vorgegebener Symmetriebezugspunkt.

Vorteilhafterweise ist erkannt worden, daß bei individuellen, progressiven Brillengläsern eine individuelle, progressive Fläche, die beispielsweise online nach den Bestellwerten bzw. den verordneten Werten des Benutzers berechnet wird, zur Erzielung von optimalen Abbildungseigenschaften ausreicht. Dies hat zur Folge, daß die zweite Fläche vorteilhafterweise ausschließlich nach kosmetischen Anforderungen gestaltet werden kann. Insbesondere stellt es herkömmlicherweise fertigungstechnisch kein Problem dar, ein Brillenglas mit zwei individuellen, komplizierten Flächen bereitzustellen.

Weiterhin vorteilhafterweise kann insbesondere bei ausgefallenen Sportbrillen die Form und Gestalt der Brillenfassung bei der Herstellung der Brillen derart berücksichtigt werden, daß die kosmetische Gestaltung der Vorderfläche des Brillenglases bzw. der Brillengläser und die Herstellung des Brillenglases bzw. der Brillengläser unter Kenntnis der Form der Brillenfassung der Sportbrille durchführbar ist. Insbesondere weisen Sportbrillen regelmäßig Fassungen auf, die stark durchgebogen sind und/oder entlang verschiedener Schnittebenen unterschiedliche Durchbiegungen aufweisen. Diese speziellen, komplizierten Formen der Brillenfassung können in das Desing der objektseitigen Fläche des Brillenglases einfließen. Ferner kann die Durchbiegung eine Funktion eines Abstandes r von einer Scheibenmitte, beispielsweise im Kastenmaß, sein. Hierbei nimmt häufig die Durchbiegung temporal stärker ab, als nasal.

Die oben genannten Voraussetzungen bzw. Anforderungen können bei der Brille gemäß einer bevorzugten Ausführungsform der vorliegenden Erfindung vorteilhafterweise berücksichtigt werden und das Brillenglas bzw. die Brillengläser entsprechend berechnet bzw. bestimmt werden, insbesondere objektseitige Fläche(n) entsprechend angepaßt werden. Hierbei sind die objektseitigen Flächen vorzugsweise gekrümmt, wobei die objektseitigen Flächen vorzugsweise eine von Null verschiedene Krümmung aufweisen können, d.h. vorzugsweise nicht plan sind.

Die erste linke Ebene kann beispielsweise ein Meridian bzw. eine Meridionalebene sein.

Sind beispielsweise die erste linke Schnittlinie und die Projektion der linken Fassungsrandkurve des Brillenfassung auf die erste linke Ebene im wesentlichen identisch, so sind die Durchbiegung des Brillenglases in der ersten linken Ebene und der Fassungsverlauf in der ersten linken Ebene ungefähr parallel. Vorzugsweise ist hierbei die erste linke Ebene ein Vertikalmeridian. Die Durchbiegung des Brillenglases in einem Meridian ist hierbei anhand der Schnittlinie der objektseitigen Fläche des Brillenglases mit der Meridionalebene definiert. Beispielsweise kann die der ersten linken Schnittlinie durch einen Schnitt der Brillenglasvorderfläche, d.h. der objektseitigen Fläche des Brillenglases mit der Meridionalebene definiert sein. Die Meridionalebene wird vorzugsweise durch die Flächennormale zu der Fläche in einem vorgegebenen Schnittpunkt bzw. Bezugspunkt und dem Richtungsvektor des Meridians aufgespannt. Der Richtungsvektor steht bevorzugt senkrecht zur Flächennormale in dem Schnittpunkt bzw. in dem Bezugspunkt. Die Durchbiegung der Brillenfassung kann beispielsweise durch Projektion der Fassungsrandkurve in die Meridionalebene definiert sein.

Die Projektion der linken Fassungsrandkurve auf die erste linke Ebene kann beispielsweise eine geschlossene Kurve, insbesondere ein Oval bzw. ein Elipsoid, etc. sein. Vorzugsweise liegt die erste linke Schnittlinie innerhalb der Projektion der linken Fassungsrandkurve der Brillenfassung auf die erste linke Ebene. Die erste linke Schnittlinie kann auch außerhalb der Projektion der linken Fassungsrandkurve auf die erste linke Ebene liegen. Die erste linke Schnittlinie weist beispielsweise einen minimalen und einen maximalen Abstand zu der Projektion der Fassungsrandkurve auf. Der minimale Abstand kann beispielsweise der Abstand der Schnittlinie zu dem nächstgelegenen Punkt der Projektion der Fassungsrandkurve sein. Der maximale Abstand kann der Abstand der Schnittlinie von dem am weitesten entfernten Punkt der Projektion der Fassungsrandkurve sein. Der Abstand wird hierbei als Länge einer Strecke gemessen, welche senkrecht zu der ersten Schnittlinie ist und die Projektion der Fassungsrandkurve schneidet, wobei die Strecke die Projektion der Fassungsrandkurve vorzugsweise in zwei Punkten schneidet, wenn die Projektion der Fassungsrandkurve eine geschlossene Kurve ist. Die Differenz zwischen dem maximalen Abstand und dem minimalen Abstand ist vorzugsweise von Null verschieden.

Beispielsweise kann die Symmetrieebene der Brillenfassung eine Ebene sein, welche im wesentlichen mittig bezüglich der Bügelscharniere angeordnet ist und/oder mittig bezüglich der Brücke der Brillenfassung angeordnet ist, d.h. die Brücke halbiert. Beispielsweise kann die Symmetrieebene im Bezugssystem der Erde in Gebrauchsposition der Brille im wesentlichen eine Vertikalebene sein.

Die Symmetrieebene kann insbesondere eine Ebene sein, welche ausgelegt ist, durch Achsensymmetrie bzw. Spiegelsymmetrie eine linke Hälfte der Brillenfassung auf die rechte Hälfte der Brillenfassung abzubilden.

### Bevorzugte Ausführungsformen

Vorzugsweise ist die objektseitige Fläche des linken Brillenglases derart ausgebildet, daß
- eine zweite linke Ebene die objektseitige Fläche des linken Brillenglases entlang einer zweiten linken Schnittlinie schneidet,
- die zweite linke Schnittlinie von einer Projektion der linken Fassungsrandkurve auf die zweite linke Ebene einen maximalen Abstand und einen minimalen Abstand aufweist,
- die Differenz zwischen dem maximalen Abstand und dem minimalen Abstand geringer als ein vorgegebener Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- die zweite linke Ebene senkrecht zu der ersten linken Ebene ist und einen Normalenvektor zu der ersten linken Schnittlinie in dem bzw. durch den vorgegebenen Schnittpunkt beinhaltet.

Die zweite linke Ebene kann z.B. eine Horizontalebene sein. Besonders bevorzugt ist die zweite linke Ebene senkrecht zu der Symmetrieebene der Brillenfassung. Weiterhin vorzugsweise ist die zweite linke Ebene in Gebrauchssituation der Brille im wesentlichen parallel zu einer horizontalen Richtung im Bezugssystem der Erde. Die Symmetrieebene ist vorzugsweise eine Vertikalebene im Bezugssystem der Erde.

Weiterhin vorzugsweise ist die zweite linke Ebene eine Ebene, die im wesentlichen die obere Begrenzung bzw. den oberen Abschnitt der Fassungsrandkurve der beiden Brillengläser tangential berührt. Hierbei kann ein Brillenglas eine obere Hälfte und eine untere Hälfte aufweisen. Ist das Brillenglas beispielsweise ein progressives Brillenglas, liegt der Nahbezugspunkt regelmäßig unterhalb des Fernbezugspunkts. In anderen Worten ist der untere Bereich der Fassungsrandkurve der Bereich, der näher an dem Nahbezugspunkt liegt, als an dem Fernbezugspunkt. Der obere Bereich ist daher der Bereich, der näher an dem Fernbezugspunkt liegt als an dem Nahbezugspunkt.

Ferner kann die zweite linke Ebene durch den oben genannten Schnittpunkt bzw. den Fußpunkt des oben genannten Normalenvektors und die beiden Bügelscharniere, insbesondere durch die Schwerpunkte der beiden Bügelscharniere aufgespannt sein. Weiterhin kann die zweite linke Ebene die Brücke und/oder einen Rand der Brillenfassung tangential berühren und parallel zu dem Normalenvektor in dem vorgegebenen Schnittpunkt bzw. Bezugspunkt bzw. Fußpunkt sein bzw. diesen Schnittpunkt bzw. Bezugspunkt bzw. Fußpunkt beinhalten.

Der Normalenvektor kann beispielsweise senkrecht zu der objektseitigen Fläche des Brillenglases bzw. senkrecht zu der Schnittlinie sein. Der Normalenvektor kann auch senkrecht zu der Scheibenebene im Kastenmaß sein. Der Fußpunkt des Normalenvektors kann beispielsweise einer der oben beschriebenen Schnittpunkte sein. Der Fußpunkt kann auch der geometrische Mittelpunkt einer Öffnung der Brillenfassung sein, in welche das Brillenglas eingepaßt wird. Ebenso kann der Schnittpunkt der geometrische Mittelpunkt einer Öffnung der Brillenfassung sein, in welche das Brillenglas eingepaßt wird.

Die zweite linke Ebene kann beispielsweise auch parallel zu einer Verbindungsgeraden der Schwerpunkte der Bügelscharniere sein und den Normalenvektor, wie oben dargestellt, umfassen.

Die zweite linke Ebene kann auch senkrecht zur der Fassungsscheibenebene im Kastenmaß sein und parallel zu einer Ebene, welche die Fassungsrandkurve des rechten und linken Brillenglases berührt.

Die zweite linke Ebene kann beispielsweise senkrecht zur der Fassungsscheibenebene im Kastenmaß sein und parallel zu einer Verbindungsgeraden der Schwerpunkte der Bügelscharniere sein.

Beispielsweise kann die augenseitige Fläche des Brillenglases Permanentgravuren aufweisen. Insbesondere kann anhand der Permanentgravuren eine Horizontallinie definiert sein. Die zweite linke Ebene kann beispielsweise eine Ebene sein, welche die Verbindungsgerade zweier solcher Permanentgravuren und den oben beschriebenen Normalenvektor beinhaltet. In anderen Worten kann die zweite linke Ebene eine Ebene sein, welche den oben beschriebenen Normalenvektor beinhaltet und parallel zu einer Verbindungsgeraden zweier vorbestimmter bzw. vorbestimmbarer Permanentgravuren ist, insbesondere parallel zu einer Verbindungsgeraden zweier vorbestimmter bzw. vorbestimmbarer Permanentgravuren zur Darstellung der Horizontallinie.

Die zweite linke Ebene kann eine Ebene sein, welche senkrecht zu der Fassungsscheibenebene ist und parallel zu einer Verbindungsgeraden zweier vorbestimmter bzw. vorbestimmbarer Permanentgravuren insbesondere zweier Permanentgravuren zur Darstellung der Horizontallinie, ist.

Die zweite linke Ebene kann auch unter einem von 90° verschiedenen Winkel die erste linke Ebene schneiden. Beispielsweise kann die zweite linke Ebene die erste linke Ebene unter einem Winkel von etwa 10°, etwa 20°, etwa 30°, etwa 40°, etwa 50°, etwa 60°, etwa 70°, etwa 80° etc. schneiden.

Vorzugsweise ist die objektseitige Fläche des linken Brillenglases derart ausgebildet, daß
- voneinander verschiedene erste linke Ebenen die objektseitige Fläche des linken Brillenglases entlang voneinander verschiedener erster linker Schnittlinien schneiden,
- jede erste linke Schnittlinie von einer Projektion der linken Fassungsrandkurve auf die entsprechende erste linke Ebene einen maximalen Abstand und einen minimalen Abstand aufweist,
- die Differenz zwischen dem maximalen Abstand und dem minimalen Abstand geringer als ein vorgegebenen Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- jede erste linke Ebene parallel zu der Symmetrieebene der Brillenfassung ist und jeweils das linke Brillenglas in einem vorgegebenen Schnittpunkt schneidet und wobei
- der vorgegebene Schnittpunkt ein Punkt aus der Menge der folgenden Punkte des linken Brillenglases ist:
   Zentrierpunkt, Prismenzentrierpunkt, Anpaßpunkt, Fernbezugspunkt, Nahbezugspunkt, geometrischer Mittelpunkt des linken Brillenglases im Kastenmaß oder ein vorgegebener Symmetriebezugspunkt.

Insbesondere sind die verschiedenen ersten linken Ebenen parallel zueinander und jede erste linke Ebene beinhaltet eine Schnittpunkt, der von den jeweiligen Schnittpunkten der weiteren ersten linken Ebenen verschieden ist.

Weiterhin vorzugsweise ist die objektseitige Fläche des linken Brillenglases derart ausgebildet, daß
- voneinander verschiedene zweite linke Ebenen die objektseitige Fläche des linken Brillenglases entlang voneinander verschiedener zweiter linker Schnittlinien schneiden
- jede zweite linke Schnittlinie von einer Projektion der linken Fassungsrandkurve auf die entsprechende zweite linke Ebene einen maximalen Abstand und einen minimalen Abstand aufweist,
- die Differenz zwischen dem maximalen Abstand und dem minimalen Abstand geringer als ein vorgegebener Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- jede zweite linke Ebene senkrecht zu der bzw. den ersten linken Ebene(n) ist und einen Normalenvektor zu einer der ersten linken Schnittlinie in dem durch den vorgegebenen Schnittpunkt beinhaltet.

Vorzugsweise gelten die obigen Ausführungen für 2, 3, 4, etc. erste linke Ebenen und/oder 2, 3, 4 etc. zweite linke Ebenen in sinngemäßer Weise. Ebenso gelten die obigen Ausführungen zu der ersten linken Ebene in sinngemäßer Weise für die 2., 3., 4. etc. erste linke Ebene bzw. können für diese Ebenen gelten. Ferner gelten die obigen Ausführungen hinsichtlich der ersten linken Ebene in sinngemäßer Weise für die zweite linke Ebene und ebenso für die 2., 3., 4. etc. zweite linke Ebene bzw. für zumindest eine der zweiten linken Ebenen.

Bevorzugt kann die erste linke Ebene eine vertikale Ebene im Bezugssystem der Erde sein, bei Anordnung der Brille gemäß einer vorgegebenen Gebrauchsposition. Die zweite linke Ebene kann eine horizontale Ebene im Bezugssystem der Erde sein, bei Anordnung der Brille gemäß einer vorgegebenen Gebrauchssituation bzw. -position. Ebenso können alle weiteren ersten Ebenen Vertikalebenen im Bezugssystem der Erde sein. Alle weiteren zweiten linken Ebenen können Horizontalebenen im Bezugssystem der Erde sein.

Ferner können alle ersten linken Ebenen parallel zueinander sein. Die zweiten linken Ebenen können ebenso alle parallel zueinander sein.

Weiterhin vorzugsweise ist
- das rechte Brillenglas derart an der Brillenfassung angeordnet, daß das rechte Brillenglas von einer rechten Fassungsrandkurve der Brillenfassung zumindest teilweise umgrenzt ist,
- die objektseitige Fläche des rechten Brillenglases derart ausgebildet, daß
   -- eine erste rechte Ebene die objektseitige Fläche des rechten Brillenglases entlang einer ersten rechten Schnittlinie schneidet,
   -- die erste rechte Schnittlinie von einer Projektion der rechten Fassungsrandkurve auf die erste rechte Ebene einen maximalen Abstand und einen minimalen Abstand aufweist,
   -- die Differenz zwischen dem maximalen Abstand und dem minimalen Abstand geringer als ein vorgegebener Grenzwert ist, wobei
   -- der vorgegebene Grenzwert etwa 3 mm, bevorzugt etwa 1 mm, bevorzugt etwa 0,2 mm, besonders bevorzugt etwa 0,1 mm ist,
   -- die erste rechte Ebene parallel zu einer Symmetrieebene der Brillenfassung ist und die objektseitige Fläche des rechten Brillenglases in einem vorgegebenen Schnittpunkt schneidet und wobei
   -- der vorgegebene Schnittpunkt ein Punkt aus der Menge der folgenden Punkte des rechten Brillenglases ist:
      Zentrierpunkt, Prismenzentrierpunkt, Anpaßpunkt, Fernbezugspunkt, Nahbezugspunkt, geometrischer Mittelpunkt des rechten Brillenglases im Kastenmaß oder ein vorgegebener Symmetriebezugspunkt.

Weiterhin vorzugsweise ist die objektseitige Fläche des rechten Brillenglases derart ausgebildet, daß
- eine zweite rechte Ebene die objektseitige Fläche des rechten Brillenglases entlang einer zweiten rechten Schnittlinie schneidet,
- die zweite rechte Schnittlinie von einer Projektion der rechten Fassungsrandkurve auf die zweite rechte Ebene einen maximalen Abstand und einen minimalen Abstand aufweist,
- die Differenz zwischen dem maximalen Abstand und dem minimalen Abstand geringer als ein vorgegebener Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- die zweite rechte Ebene senkrecht zu der ersten rechten Ebene ist und einen Normalenvektor zu der ersten rechte Schnittlinie in dem vorgegebenen Schnittpunkt beinhaltet.

Die obigen Ausführungen zum rechten Brillenglas können sinngemäß für das rechte Brillenglas angewandt werden.

Weiterhin vorzugsweise ist die objektseitige Fläche des rechten Brillenglases ausgebildet, daß
- voneinander verschiedene erste rechte Ebenen die objektseitige Fläche des rechten Brillenglases entlang voneinander verschiedener erster rechter Schnittlinien schneiden,
- jede erste rechte Schnittlinie von einer Projektion der rechten Fassungsrandkurve auf die entsprechende erste rechte Ebene einen maximalen Abstand und einen minimalen Abstand aufweist,
- die Differenz zwischen dem maximalen Abstand und dem minimalen Abstand geringer als ein vorgegebenen Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- jede erste rechte Ebene parallel zu der Symmetrieebene der Brillenfassung ist und jeweils das rechte Brillenglas in einem vorgegebenen Schnittpunkt schneidet und wobei
- der vorgegebene Schnittpunkt ein Punkt aus der Menge der folgenden Punkte des rechte Brillenglases ist:
   Zentrierpunkt, Prismenzentrierpunkt, Anpaßpunkt, Fernbezugspunkt, Nahbezugspunkt, geometrischer Mittelpunkt des rechten Brillenglases im Kastenmaß oder ein vorgegebener Symmetriebezugspunkt.

Weiterhin vorzugsweise ist die objektseitige Fläche es rechten Brillenglases ausgebildet, daß
- voneinander verschiedene zweite rechte Ebenen die objektseitige Fläche des rechten Brillenglases entlang voneinander verschiedener zweiter rechter Schnittlinien schneiden
- jede zweite rechte Schnittlinie von einer Projektion der rechten Fassungsrandkurve auf die entsprechende zweite rechte Ebene einen maximalen Abstand und einen minimalen Abstand aufweist,
- die Differenz zwischen dem maximalen Abstand und dem minimalen Abstand geringer als ein vorgegebener Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- jede zweite linke Ebene senkrecht zu der bzw. den ersten linken Ebene(n) ist und einen Normalenvektor zu einer der ersten rechte Schnittlinie in dem bzw. durch den vorgegebenen Schnittpunkt beinhaltet.

Insbesondere vorzugsweise gelten die obigen Ausführungen für das linke Brillenglas sinngemäß für das rechte Brillenglas, wobei in obigen Ausführungen das linke Brillenglas durch das rechte Brillenglas ersetzt werden kann. Entsprechend kann/können die linke(n) Ebene(n) durch die rechte(n) Ebene(n) ersetzt werden, d.h. die erste linke Ebene kann durch die erste rechte Ebene, die zweite linke Ebene kann durch die zweite rechte Ebene bzw. eine Vielzahl erster linker Ebenen kann durch eine Vielzahl erster rechter Ebenen und eine Vielzahl zweiter linker Ebenen kann durch eine Vielzahl zweiter rechter Ebenen ersetzt werden.

Weiterhin vorzugsweise sind die objektseitigen Flächen der beiden Brillengläser hinsichtlich der Symmetrieebene der Brillenfassung symmetrisch, insbesondere achsensymmetrisch bzw. spiegelsymmetrisch.

Vorzugsweise ist der vorgegebene Grenzwert etwa 10 mm bevorzugt etwa 5 mm, bevorzugt etwa 3 mm, bevorzugt etwa 1 mm, bevorzugt etwa 5 mm bevorzugt etwa 0,2 mm, besonders bevorzugt etwa 0,1 mm.

Weiterhin vorzugsweise ist der vorgegebene Symmetriebezugspunkt eines Brillenglases ein Punkt auf einer Schnittlinie einer Bezugsebene mit der objektseitigen Fläche des entsprechenden Brillenglases, wobei
- der vorgegebene Symmetriebezugspunkt in der Mitte der Schnittlinie liegt und wobei
- die Bezugsebene parallel zu der Symmetrieebene ist und mittig zwischen einer nasalen und einer temporalen Begrenzungsebene angeordnet ist,
- die nasale Begrenzungsebene parallel zu der Symmetrieebene ist, die Fassungsrandkurve des Brillenglases nicht schneidet und die Fassungsrandkurve des Brillenglases in einem nasalen Bereich berührt und
- die temporale Begrenzungsebene parallel zu der Symmetrieebene ist, die Fassungsrandkurve des Brillenglases nicht schneidet und die Fassungsrandkurve des Brillenglases in einem temporalen Bereich berührt.

Bei einer Darstellung des Brillenglases, insbesondere der augenseitigen Fläche des linken Brillenglases ist die temporale Seite des Brillenglases die linke Seite des Brillenglases (in der Zeichenebene). Die nasale Seite der augenseitigen Fläche des linken Brillenglases ist die rechte Seite (in der Zeichenebene). Folglich berührt die temporale Bezugsebene das linke Brillenglas links und die nasale Bezugsebene berührt das Brillenglas rechts. Die nasale Seite bzw. der nasale Bereich ist der Bereich des linken Brillenglases, der zur Nase hin gewandt ist.

Analoge Ausführungen gelten sinngemäß für das rechte Brillenglas, wobei bei dem rechten Brillenglas die nasale Seite die linke Seite der augenseitigen Fläche ist und die temporale Seite die rechte Seite der augenseitigen Fläche ist.

Bevorzugt ist der vorgegebene Symmetriebezugspunkt eines Brillenglases ein Punkt auf einer Schnittlinie einer Bezugsebene mit der objektseitigen Fläche des entsprechenden Brillenglases, wobei
- der vorgegebene Symmetriebezugspunkt in der Mitte der Schnittlinie liegt und
- die Bezugsebene parallel zu der Symmetrieebene ist und etwa 10 mm, bevorzugt etwa 15 mm, bevorzugt etwa 20 mm, bevorzugt etwa 22 mm, bevorzugt etwa 25 mm, bevorzugt etwa 30 mm, besonders bevorzugt etwa 35 mm von der Symmetrieebene entfernt ist.

Vorzugsweise ist eine objektseitige Fläche oder sind beide objektseitigen Flächen symmetriefreie Flächen.

Beispielsweise existiert kein Symmetriepunkt bzw. -zentrum anhand dessen die jeweilige objektseitige Fläche auf sich selbst abgebildet werden kann. Beispielsweise existiert keine Symmetrieachse bzw. -ebene anhand deren die jeweilige objektseitige Fläche auf sich selbst abgebildet werden kann.

In anderen Worten kann die linke objektseitige Fläche und/oder die rechte objektseitige Fläche von einer symmetrischen Fläche abweichen. Beispielsweise kann die linke objektseitige Fläche und/oder die rechte objektseitige Fläche jeweils eine Fläche ohne erkennbare Symmetrie sein, insbesondere Abweichungen von einer sphärischen oder asphärischen Form aufweisen.

Besonders bevorzugt sind die objektseitigen Flächen der beiden Brillengläser hinsichtlich der Symmetrieebene der Brillenfassung zueinander symmetrisch, insbesondere achsensymmetrisch bzw. spiegelsymmetrisch.

Vorzugsweise ist eine augenseitige Fläche oder sind beide augenseitigen Flächen progressive Flächen.

Da aufgrund der Altersstruktur immer mehr Menschen presbyop werden und Sport treiben, können auch diese vorteilhafterweise mit optimal angepaßten, progressiven Sportbrillen versorgt werden. Vorteilhafterweise wurde erfindungsgemäß insbesondere gerade erkannt, daß, wenn auf der Vorderfläche, d.h. der objektseitigen Fläche des Brillenglases, keine Relation zu einer vorgegebenen Symmetrie vorliegen muß, diese Vorderfläche optimal an die Fassungsgestalt angepaßt werden kann. Eine optimale Anpassung an die Fassungsgestalt beinhaltet beispielsweise, daß die Durchbiegung in jedem Meridian, d.h. die Schnittlinie in jeder linken Ebene (jeder ersten bzw. zweiten linken Ebene) ungefähr parallel zur Fassungsrandkurve verläuft, d.h. im wesentlichen die Schnittlinie und die Projektion der Fassungsrandkurve der Brillenfassung auf die entsprechende Ebene einen im wesentlichen identischen Krümmungsverlauf bzw. Durchbiegungsverlauf aufweisen. Ferner kann die Durchbiegung der objektseitigen Fläche des Brillenglases als Funktion des Abstandes r von der geometrischen Mitte des Brillenglases so gestaltet sein, daß sie ungefähr parallel zur Fassungsrandkurve verläuft.

### Verfahren gemäß einem Aspekt der Erfindung

Ein weiterer Aspekt der vorliegenden Erfindung betrifft ein Verfahren zum Herstellen einer Brille mit einer Brillenfassung und einem daran angeordneten ersten Brillenglas, nachfolgend als linkes Brillenglas bezeichnet, und einem daran angeordneten zweiten Brillenglas, nachfolgend als rechtes Brillenglas bezeichnet, mit den folgenden Schritten:
- Bestimmen, insbesondere Vermessen einer ersten Fassungsrandkurve der Brillenfassung, nachfolgend als linke Fassungsrandkurve bezeichnet, welche ausgebildet ist, das an der Brillenfassung angeordnete linke Brillenglas zumindest teilweise zu umgrenzen;
- Bestimmen, insbesondere Berechnen einer objektseitigen Fläche des linken Brillenglases, daß die objektseitige Fläche des linken Brillenglases derart ausgebildet ist, daß
   -- eine erste linke Ebene die objektseitige Fläche des linken Brillenglases entlang einer ersten linken Schnittlinie schneidet,
   -- die erste linke Schnittlinie von einer Projektion der linken Fassungsrandkurve auf die erste linke Ebene einen maximalen Abstand und einen minimalen Abstand aufweist,
   -- die Differenz zwischen dem maximalen Abstand und dem minimalen Abstand geringer als ein vorgegebener Grenzwert ist, wobei
   -- der vorgegebene Grenzwert etwa 3 mm, bevorzugt etwa 1 mm, bevorzugt etwa 0,2 mm, besonders bevorzugt etwa 0,1 mm ist,
   -- die erste linke Ebene parallel zu einer Symmetrieebene der Brillenfassung ist und das linke Brillenglas in einem vorgegebenen Schnittpunkt schneidet und wobei
   -- der vorgegebene Schnittpunkt ein Punkt aus der Menge der folgenden Punkte des linken Brillenglases ist:
      Zentrierpunkt, Prismenzentrierpunkt, Anpaßpunkt, Fernbezugspunkt, Nahbezugspunkt, geometrischer Mittelpunkt des linken Brillenglases im Kastenmaß oder ein vorgegebener Symmetriebezugspunkt;
- Bestimmen, insbesondere Berechnen der augenseitigen Fläche des linken Brillenglases derart, daß das linke Brillenglas vorgegebene optische Eigenschaften aufweist.

Vorzugsweise umfaßt das Verfahren, insbesondere der Schritt des Bestimmens der objektseitigen Fläche, einen oder mehrere der nachfolgenden Schritte, vorzugsweise in der angegebenen Reihenfolge:
- Bestimmen bzw. Vorgeben des zumindest einen Schnittpunktes.
- Bestimmen bzw. Vorgeben der zumindest einen ersten linken Ebene;
- Bestimmen bzw. Berechnen der Projektion der Fassungsrandkurve auf die zumindest eine erste linke Ebene;
- Bestimmen bzw. Messen bzw. Berechnen der zumindest einen ersten linken Schnittlinie der ersten linken Ebene mit der objektseitigen Fläche des linken Brillenglases;
- Bestimmen bzw. Messen bzw. Berechnen des maximalen Abstands und des minimalen Abstands der erste linke Schnittlinie von der Projektion der linken Fassungsrandkurve auf die erste linke Ebene,
- Bestimmen bzw. Messen bzw. Berechnen der Differenz zwischen dem maximalen Abstand und dem minimalen Abstand;
- Bestimmen bzw. Vorgeben des Grenzwertes bzw. der Größe des Grenzwertes;

Weiterhin vorzugsweise gelten die angegebenen Schritte, insbesondere in dieser Reihenfolge, sinngemäß auch für die weiteren linken Ebenenen bzw. für das rechte Brillenglas, insbesondere für eine oder mehrere erste und/oder zweite rechte Ebenen.

Vorzugsweise kann auch von der oben genannten Reihenfolge der Schritte abgewichen werden.

In anderen Worten wird vorzugsweise die Fassung dreidimensional mit einem Tracer zumindest teilweise oder vollständig abgetastet. Daten bzw. Abmessungen der Brillenfassung können auch zumindest teilweise oder vollständig einer Datenbank entnommen werden und/oder zumindest teilweise oder vollständig manuell eingegebene werden. Anschließend wird die Vorderfläche, d.h. objektseitige Fläche, vorzugsweise ohne Symmetrien berechnet, wobei die Vorderfläche optimal an die Fassungsgestalt angepaßt ist. Daraufhin wird die Rückfläche, d.h. die augenseitige Fläche unter Kenntnis der bereits berechneten bzw. bestimmten Vorderfläche so berechnet oder optimiert, daß die Abbildungseigenschaften des Brillenglases optimal sind. Optimale Abbildungseigenschaften sind Abbildungseigenschaften, die ungefähr denen eines Brillenglases ohne Verkippung und starker Druchbiegung entsprechen. In anderen Worten kann erfindungsgemäß vorteilhafterweise ein Brillenglas optimal an eine Brillenfassung angepaßt werden, so daß unter einem kosmetischen Aspekt die Form der Vorderfläche des Brillenglases im wesentlichen der Form der Brillenfassung entspricht, wobei jedoch die Brille im wesentlichen identische Abbildungseigenschaften aufweist, wie eine herkömmliche Brille für den entsprechenden Benutzer.

Vorzugsweise wird die objektseitige Fläche des linken Brillenglases derart bestimmt, insbesondere berechnet, daß
- eine zweite linke Ebene die objektseitige Fläche des linken Brillenglases entlang einer zweiten linken Schnittlinie schneidet,
- die zweite linke Schnittlinie von einer Projektion der linken Fassungsrandkurve auf die zweite linke Ebene einen maximalen Abstand und einen minimalen Abstand aufweist,
- die Differenz zwischen dem maximalen Abstand und dem minimalen Abstand geringer als ein vorgegebener Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- die zweite linke Ebene senkrecht zu der ersten linken Ebene ist und einen Normalenvektor zu der ersten linken Schnittlinie in dem bzw. durch den vorgegebenen Schnittpunkt beinhaltet.

Vorzugsweise umfaßt das Verfahren, einen oder mehrere der nachfolgenden Schritte:
- Bestimmen bzw. Vorgeben der zumindest einen zweiten linken Ebene;
- Bestimmen bzw. Berechnen der Projektion der Fassungsrandkurve auf die zumindest eine zweite linke Ebene;
- Bestimmen bzw. Messen bzw. Berechnen der zumindest einen zweiten linken Schnittlinie der zweiten linken Ebene mit der objektseitigen Fläche des linken Brillenglases;
- Bestimmen bzw. Messen bzw. Berechnen des maximalen Abstands und des minimalen Abstands der zweiten linke Schnittlinie von der Projektion der linken Fassungsrandkurve auf die zweite linke Ebene,
- Bestimmen bzw. Messen bzw. Berechnen der Differenz zwischen dem maximalen Abstand und dem minimalen Abstand;
- Bestimmen bzw. Vorgeben des Grenzwertes bzw. der Größe des Grenzwertes;
- Bestimmen bzw. Vorgeben des zumindest einen Schnittpunktes.

Vorzugsweise wird die objektseitige Fläche des linken Brillenglases derart bestimmt, insbesondere berechnet, daß
- voneinander verschiedene erste linke Ebenen die objektseitige Fläche des linken Brillenglases entlang voneinander verschiedener erster linker Schnittlinien schneiden,
- jede erste linke Schnittlinie von einer Projektion der linken Fassungsrandkurve auf die entsprechende erste linke Ebene einen maximalen Abstand und einen minimalen Abstand aufweist,
- die Differenz zwischen dem maximalen Abstand und dem minimalen Abstand geringer als ein vorgegebenen Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- jede erste linke Ebene parallel zu der Symmetrieebene der Brillenfassung ist und jeweils das linke Brillenglas in einem vorgegebenen Schnittpunkt schneidet und wobei
- der vorgegebene Schnittpunkt ein Punkt aus der Menge der folgenden Punkte des linken Brillenglases ist:
   Zentrierpunkt, Prismenzentrierpunkt, Anpaßpunkt, Fernbezugspunkt, Nahbezugspunkt, geometrischer Mittelpunkt des linken Brillenglases im Kastenmaß oder ein vorgegebener Symmetriebezugspunkt.

Vorzugsweise wird die objektseitige Fläche des linken Brillenglases derart bestimmt, insbesondere berechnet, daß
- voneinander verschiedene zweite linke Ebenen die objektseitige Fläche des linken Brillenglases entlang voneinander verschiedener zweiter linker Schnittlinien schneiden
- jede zweite linke Schnittlinie von einer Projektion der linken Fassungsrandkurve auf die entsprechende zweite linke Ebene einen maximalen Abstand und einen minimalen Abstand aufweist,
- die Differenz zwischen dem maximalen Abstand und dem minimalen Abstand geringer als ein vorgegebener Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- jede zweite linke Ebene senkrecht zu der bzw. den ersten linken Ebene(n) ist und einen Normalenvektor zu einer der ersten linken Schnittlinie in dem durch den vorgegebenen Schnittpunkt beinhaltet.

Vorzugsweise umfaßt das Verfahren die weiteren Schritte:
- Bestimmen, insbesondere Vermessen einer zweiten Fassungsrandkurve der Brillenfassung, nachfolgend als rechte Fassungsrandkurve bezeichnet, welche ausgebildet ist, das an der Brillenfassung angeordnete rechte Brillenglas zumindest teilweise zu umgrenzen;
- Bestimmen, insbesondere Berechnen einer objektseitigen Fläche des rechten Brillenglases, daß die objektseitige Fläche des rechten Brillenglases derart ausgebildet ist, daß
   -- eine erste rechte Ebene die objektseitige Fläche des rechten Brillenglases entlang einer ersten rechten Schnittlinie schneidet,
   -- die erste rechte Schnittlinie von einer Projektion der rechten Fassungsrandkurve auf die erste rechte Ebene einen maximalen Abstand und einen minimalen Abstand aufweist,
   -- die Differenz zwischen dem maximalen Abstand und dem minimalen Abstand geringer als ein vorgegebener Grenzwert ist, wobei
   -- der vorgegebene Grenzwert etwa 3 mm, bevorzugt etwa 1 mm, bevorzugt etwa 0,2 mm, besonders bevorzugt etwa 0,1 mm ist,
   -- die erste rechte Ebene parallel zu einer Symmetrieebene der Brillenfassung ist und die objektseitige Fläche des rechten Brillenglases in einem vorgegebenen Schnittpunkt schneidet und wobei
   -- der vorgegebene Schnittpunkt ein Punkt aus der Menge der folgenden Punkte des rechten Brillenglases ist:
      Zentrierpunkt, Prismenzentrierpunkt, Anpaßpunkt, Fernbezugspunkt, Nahbezugspunkt, geometrischer Mittelpunkt des rechten Brillenglases im Kastenmaß oder ein vorgegebener Symmetriebezugspunkt.
- Bestimmen insbesondere Berechnen der augenseitigen Fläche des rechten Brillenglases derart, daß das rechte Brillenglas vorgegebene optische Eigenschaften aufweist.

Vorzugsweise wird die objektseitige Fläche des rechten Brillenglases derart bestimmt, insbesondere berechnet, daß
- eine zweite rechte Ebene die objektseitige Fläche des rechten Brillenglases entlang einer zweiten rechten Schnittlinie schneidet,
- die zweite rechte Schnittlinie von einer Projektion der rechten Fassungsrandkurve auf die zweite rechte Ebene einen maximalen Abstand und einen minimalen Abstand aufweist,
- die Differenz zwischen dem maximalen Abstand und dem minimalen Abstand geringer als ein vorgegebener Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- die zweite rechte Ebene senkrecht zu der ersten rechten Ebene ist und einen Normalenvektor zu der ersten rechte Schnittlinie in dem bzw. durch den vorgegebenen Schnittpunkt beinhaltet.

Weiterhin vorzugsweise können einige der vorgenannten Schritte, insbesondere alle der vorgenannten Schritte iterativ durchgeführt werden.

Ein weiterer Aspekt der vorliegenden Erfindung betrifft eine Verwendung eines ersten Brillenglases, nachfolgend als linkes Brillenglas bezeichnet und eines zweiten Brillenglases, nachfolgend als rechtes Brillenglas bezeichnet, zum Anordnen an bzw. in einer Brillenfassung zum Herstellen einer Brille, wobei
- jedes Brillenglas zwei gegenüberliegende Flächen aufweist, wobei eine Fläche nachfolgend als augenseitige Fläche und die andere Fläche nachfolgend als objektseitige Fläche bezeichnet ist,
- das linke Brillenglas derart an der Brillenfassung angeordnet ist, daß das linke Brillenglas von einer linken Fassungsrandkurve der Brillenfassung zumindest teilweise umgrenzt ist,
- die objektseitige Fläche des linken Brillenglases ausgebildet ist, daß
   -- eine erste linke Ebene die objektseitige Fläche des linken Brillenglases entlang einer ersten linken Schnittlinie schneidet,
   -- die erste linke Schnittlinie von einer Projektion der linken Fassungsrandkurve auf die erste linke Ebene einen maximalen Abstand und einen minimalen Abstand aufweist,
   -- die Differenz zwischen dem maximalen Abstand und dem minimalen Abstand geringer als ein vorgegebener Grenzwert ist, wobei
   -- der vorgegebene Grenzwert etwa 3 mm, bevorzugt etwa 1 mm, bevorzugt etwa 0,2 mm, besonders bevorzugt etwa 0,1 mm ist,
   -- die erste linke Ebene parallel zu einer Symmetrieebene der Brillenfassung ist und das linke Brillenglas in einem vorgegebenen Schnittpunkt schneidet und wobei
   -- der vorgegebene Schnittpunkt ein Punkt aus der Menge der folgenden Punkte des linken Brillenglases ist:
      Zentrierpunkt, Prismenzentrierpunkt, Anpaßpunkt, Fernbezugspunkt, Nahbezugspunkt, geometrischer Mittelpunkt des linken Brillenglases im Kastenmaß oder ein vorgegebener Symmetriebezugspunkt
   und/oder wobei
- das rechte Brillenglas derart an der Brillenfassung angeordnet ist, daß das rechte Brillenglas von einer rechten Fassungsrandkurve der Brillenfassung zumindest teilweise umgrenzt ist,
- die objektseitige Fläche des rechten Brillenglases derart ausgebildet ist, daß
   -- eine erste rechte Ebene die objektseitige Fläche des rechten Brillenglases entlang einer ersten rechten Schnittlinie schneidet,
   -- die erste rechte Schnittlinie von einer Projektion der rechten Fassungsrandkurve auf die erste rechte Ebene einen maximalen Abstand und einen minimalen Abstand aufweist,
   -- die Differenz zwischen dem maximalen Abstand und dem minimalen Abstand geringer als ein vorgegebener Grenzwert ist, wobei
   -- der vorgegebene Grenzwert etwa 3 mm, bevorzugt etwa 1 mm, bevorzugt etwa 0,2 mm, besonders bevorzugt etwa 0,1 mm ist,
   -- die erste rechte Ebene parallel zu einer Symmetrieebene der Brillenfassung ist und die objektseitige Fläche des rechten Brillenglases in einem vorgegebenen Schnittpunkt schneidet und wobei
   -- der vorgegebene Schnittpunkt ein Punkt aus der Menge der folgenden Punkte des rechten Brillenglases ist:
      Zentrierpunkt, Prismenzentrierpunkt, Anpaßpunkt, Fernbezugspunkt, Nahbezugspunkt, geometrischer Mittelpunkt des rechten Brillenglases im Kastenmaß oder ein vorgegebener Symmetriebezugspunkt.

### Computerprogrammprodukt gemäß einem Aspekt der Erfindung

Ein weiterer Aspekt der vorliegenden Erfindung betrifft ein Computerprogrammprodukt, insbesondere auf einem computerlesbaren Medium gespeichert oder als Signal verwirklicht, welches, wenn geladen in den Speicher des Computers und ausgeführt von einem Computer, ein erfindungsgemäßes Verfahren durchführt.

Die obigen Ausführungen zu den Aspekten der Erfindung sind nicht auf die jeweiligen Aspekte der Erfindung beschränkt. Vielmehr gelten die Ausführungen jeweils sinngemäß für alle Aspekte der Erfindung. Weiterhin können einzelne Merkmale der Aspekte beliebig miteinander kombiniert werden.

### Figurenbeschreibung

Bevorzugte Ausführungsform bzw. Ausführungsvarianten der vorliegenden Erfindung werden anhand begleitender Figuren beispielhaft beschrieben, wobei einzelne Merkmale der beschriebenen bevorzugten Ausführungsformen beliebig miteinander kombiniert werden können. Es zeigt
- Figur 1:: eine schematische Schnittansicht eines Teils bzw. eines Bereichs einer bevorzugten Brillenfassung;
- Figur 2:: eine schematische dreidimensionale Ansicht eines Ausschnitts einer bevorzugten Brille;
- Figur 3:: eine schematische Ansicht eines bevorzugten Brillenglases;
- Figur 4:: eine schematische Seitenansicht einer bevorzugten Brille
- Figur 5:: eine schematische Aufsicht eines Teils einer bevorzugten Brille
- Figur 6:: eine schematische Darstellung einer Krümmung eines bevorzugten Brillenglases;
- Figur 7:: eine schematische Seitenansicht einer bevorzugten Brille;
- Figur 8:: eine schematische Aufsicht eines Teils einer bevorzugten Brille;
- Figur 9:: eine schematische Darstellung einer Krümmung eines bevorzugten Brillenglases;
- Figuren 10a bis 10d:: schematische Ansichten einer Schnittlinie und einer Projektion einer Fassungsrandkurve.

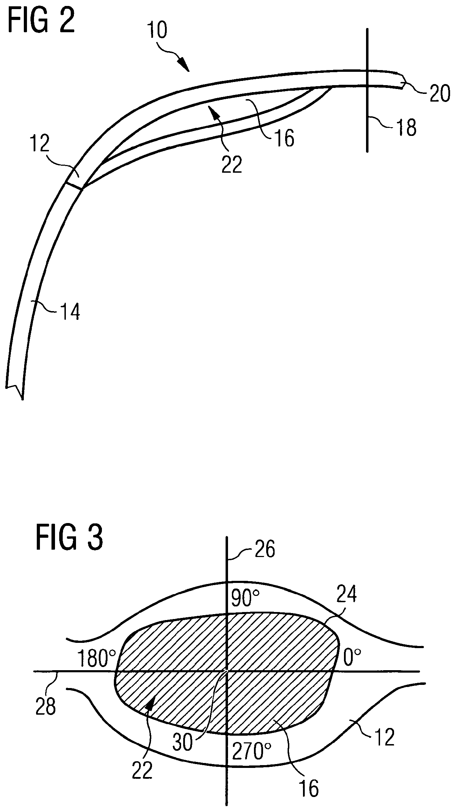

**Figur 2** zeigt eine schematische dreidimensionale Ansicht eines Teilbereichs einer Brille gemäß einer bevorzugten Ausführungsform der vorliegenden Erfindung. Insbesondere zeigt Figur 2 die linke Hälfte der Brille 10. Die Brille 10 umfaßt eine Brillenfassung 12 mit einem Bügel 14 und ein Brillenglas 16. Ferner ist eine Symmetrieebene 18 durch eine Linie symbolisch dargestellt. Die Symmetrieebene 18 teilt insbesondere eine Brücke 20 der Brillenfassung 12 vorzugsweise mittig.

Das in Figur 2 beispielhaft dargestellte Brillenglas 16 ist das linke Brillenglas 16 der Brille 10, wobei gemäß der vorliegenden, beispielhaften Ansicht eine augenseitige Fläche 22 des linken Brillenglases 16 erkennbar ist. Die nachfolgenden Ausführungen gelten sinngemäß auch für das rechte Brillenglas (nicht gezeigt).

Der an das Brillenglas 16 angrenzende Bereich der Brillenfassung 12 kann die Fassungsrandkurve 24 der Brillenfassung 12 repräsentieren bzw. definieren. Die Fassungsrandkurve 24 kann auf eine erste linke Ebene (nicht gezeigt) und/oder auf eine zweite linke Ebene (nicht gezeigt) projiziert werden kann.

**Figur 3** zeigt eine schematische Frontansicht eines Teilbereichs der Brillenfassung 12 mit daran angeordnetem linken Brillenglas 16. Insbesondere zeigt Figur 3 eine Ansicht der augenseitigen Fläche 22 des linken Brillenglases 16. Schraffiert ist das linke Brillenglas 16 dargestellt insbesondere ein Teil der augenseitigen Fläche 22 des linken Brillenglases 16, bzw. der Bereich des linken Brillenglases 16, welcher durchblickt werden kann. Dieser Bereich ist von der Brillenfassung 12 umgrenzt. Insbesondere ist dieser Bereich des linken Brillenglases 16 von einer Fassungsrandkurve 24 der Brillenfassung 12 umgrenzt. Das linke Brillenglas 16 kann somit über die Fassungsrandkurve 24 hinaus in die Brillenfassung 12 hinein ragen, um in bzw. an der Brillenfassung 12 befestigt zu sein (siehe auch Figur 1). Beispielsweise kann, wie in der in Figur 3 beispielhaft gezeigten Ausführungsform, die Brillenfassung 12 das linke Brillenglas 16 vollständig umgeben. Es ist auch möglich, daß die Brillenfassung 12 das linke Brillenglas 16 lediglich teilweise umgibt. Die Fassungsrandkurve 24 kann die Grenze zwischen linkem Brillenglas 16 und Fassung 12 sein, wobei die Fassungsrandkurve 24 nicht, wie in Figur 3 gezeigt, eine geschlossene Kurve sein muß. Die Fassungsrandkurve 24 kann beispielsweise lediglich eine gekrümmte Linie sein, wenn z.B. die Brillenfassung 12 das linke Brillenglas 16 nicht vollständig umgibt.

Ferner ist in Figur 3 eine erste linke Ebene 26 dargestellt. Die erste linke Ebene 26 ist als Linie dargestellt, d.h. die erste linke Ebene 26 ist parallel zu der Richtung der schematischen Ansicht gemäß Figur 3, d.h. senkrecht zu der Zeichenebene. Die erste linke Ebene 26 schneidet insbesondere die Punkte 90° und 270°. Hierbei ist das Brillenglas 16 in 360° unterteilt. Die erste linke Ebene 26 definiert beispielsweise eine Vertikalebene bzw. einen Vertikalmeridian bzw. ist die erste Ebene parallel zu einer Vertikalebene bzw. zu einem Vertikalmeridian. In Gebrauchsposition ist die erste linke Ebene 26 beispielsweise parallel zu einer Vertikalebene in Bezugssystem der Erde. Ferner ist in Figur 3 eine zweite linke Ebene 28 dargestellt. Die zweite linke Ebene 28 verbindet die Punkte 0° und 180° des Brillenglases 16. Folglich ist die zweite linke Ebene 28 senkrecht zu der ersten linken Ebene 26. Ferner schneiden sich die erste linke Ebene 26 und die zweite linke Ebene 28 in einem Schnittpunkt. Der Punkt kann beispielsweise der geometrische Mittelpunkt 30 des Brillenglases 16, insbesondere der geometrische Mittelpunkt 30 des sichtbaren Bereichs des Brillenglases 16, wie er schraffiert dargestellt ist, sein.

Der Bereich um den Punkt 90° kann oben im vorgenannten Sinn sein. Der Bereich um 270° kann unten im vorgenannten Sinn sein.

Ferner kann die zweite linke Ebene 28 bei herkömmlicher Gebrauchsposition der Brille 10 eine Horizontalebene im Bezugssystem der Erde sein.

Die erste linke Ebene 26 und die zweite linke Ebene 28 sind lediglich beispielhafte, repräsentative Ebenen. Diese Ebenen können auch verschoben bzw. in ihrer Richtung verändert bzw. gedreht werden. Beispielsweise könnte die erste linke Ebene auch die Punkte 100° und 280° verbinden. Ebenso könnte die zweite linke Ebene die Punkte 10° und 190° verbinden.

**Figur 4** zeigt beispielhaft eine Seitenansicht einer Brille 10 gemäß einer bevorzugten Ausführungsform. Insbesondere ist in Figur 4 die Brillenfassung 12, der Bügel 14 und das rechte Brillenglas 17 gezeigt. In Figur 4 ist hierbei beispielhaft eine rechte Seitenansicht der Brille 10 gezeigt, d.h. das gezeigte Brillenglas ist das rechte Brillenglas 17 der Brille 10. Linien 32 repräsentieren die Krümmung des rechten Brillenglases 17 in einer Vertikalrichtung. Entsprechend der in Figur 4 gezeigten Ausführungsform weist das rechte Brillenglas 17 keine vertikale Krümmung auf, sondern lediglich eine horizontale Krümmung (jeweils im Bezugssystem der Erde).

**Figur 5** zeigt eine Aufsicht einer bevorzugten Ausführungsform einer Brille 10. Die Brille 10 umfaßt die Brillenfassung 12 und einen Bügel 14 sowie die Brücke 20. Weiterhin ist in Figur 5 die Symmetrieebene 18 dargestellt. Die Symmetrieebene 18 ist vorzugsweise senkrecht zu der Zeichenebene und daher als Linie dargestellt. Ferner umfaßt die Brille 10 das Brillenglas 16, wobei das gezeigte Brillenglas 16 das linke Brillenglas 16 der Brille 10 ist. Ferner ist in Figur 5 ein Scharnier bzw. Gelenk 34 dargestellt. Anhand des Gelenks 34 ist der Bügel 14 an der verbleibenden Brillenfassung 12 angelenkt und kann gedreht werden. Die Drehachse (nicht gezeigt) ist hier im wesentlichen senkrecht zu der Zeichenebene. Ferner ist in Figur 5 eine Linie 36 dargestellt. Die Linie 36 kann beispielsweise das Scharnier bzw. Gelenk 34 mit dem weiteren Scharnier bzw. Gelenk (nicht gezeigt) verbinden. Eine zweite linke Ebene (nicht gezeigt) kann beispielsweise parallel zu der Linie 36 sein. Die Linie 36 ist vorzugsweise im wesentlichen senkrecht zu einer Rotationsachse (nicht gezeigt) des Bügels 14. Ebenso kann eine zweite rechte Ebene (nicht gezeigt) im wesentlichen parallel zu der Linie 36 sein. Wie in Figur 5 ferner dargestellt ist, ist die objektseitige Fläche 38 des Brillenglases 16 im wesentlichen bündig mit einer einem Objekt zugewandten Seite 40 der Brillenfassung 12. Folglich ist die Projektion einer linken Fassungsrandkurve (nicht gezeigt) der Brillenfassung 12 auf die erste linke Ebene (nicht gezeigt) und/oder auf die zweite linke Ebene (nicht gezeigt) im wesentlichen identisch bzw. identisch mit der Schnittlinie der ersten linken Ebene (nicht gezeigt) bzw. der zweiten linken Ebene (nicht gezeigt) mit der objektseitigen Fläche 38 des Brillenglases 16.

In **Figur 6** ist die Krümmung des linken Brillenglases 16, wie es in Figur 5 gezeigt ist, ausgehend von der Scheibenmitte (Punkt 30 in Figur 3) zum Punkt 90° hin als Linie 42 dargestellt. In anderen Worten ist in Figur 6 als Linie 42 die Schnittlinie der ersten linken Ebene 26 (gezeigt in Figur 3) von der Scheibenmitte aus nach oben hin, d.h. zum Punkt 90°, gezeigt. Der Abstand, ausgehend von der Scheibenmitte zum Rand hin, ist auf der horizontalen Achse (in mm) dargestellt. Ausgehend von der Scheibenmitte am Ursprung des Koordinatensystems ist die Krümmung bis zu einem Rand des Brillenglases dargestellt. Der Rand des Brillenglases ist von der Scheibenmitte um eine Distanz entfernt, welche gleich der Hälfte des Querschnitts des Brillenglases (entlang der entsprechenden Richtung) ist. Die ist in Figur 6 durch das Symbol Ø/2 dargestellt. Auf der vertikalen Achse ist die Krümmung in Dioptrien (dpt) dargestellt.

Wie in Figur 4 dargestellt ist, weist die Schnittlinie eine Krümmung 0 auf, d.h. das Brillenglas 16 ist entlang dieser Ebene plan. Ausgehend vom Mittelpunkt 30 des Brillenglases 16 (d.h. der Scheibenmitte) zu dem Punkt 0° hin ist die Krümmung in Linie 44 dargestellt. Die Krümmung ist ausgehend von der Scheibenmitte 30 zum Punkt 0° hin ist konstant. In anderen Worten ist die Schnittlinie der zweiten linken Ebene 28, (wie in Figur 3 gezeigt) eine Linie mit konstanter Krümmung. Dies kann auch in Figur 5 gesehen werden, wobei die Schnittlinie der dargestellten objektseitigen Fläche 38 in Aufsicht des Brillenglases 16 gleicht. Ferner ist das Brillenglas 16 vorzugsweise symmetrisch, weswegen, ausgehend von der Scheibenmitte zu dem Punkt 270° die Krümmung konstant gleich 0 ist und ausgehend von der Scheibenmitte zu dem Punkt 180° die Krümmung einen konstanten Wert aufweist. Krümmung kann gleichbedeutend mit Durchbiegung bzw. Schnittlinie verwendet werden.

**Figur 7** zeigt eine Ansicht einer bevorzugten Ausführungsform einer Brille 10 entsprechend der Ansicht von Figur 4. Die Linien 46 in Figur 7 verdeutlichen, daß das rechte Brillenglas 17 sowohl horizontal als auch vertikal gekrümmt ist.

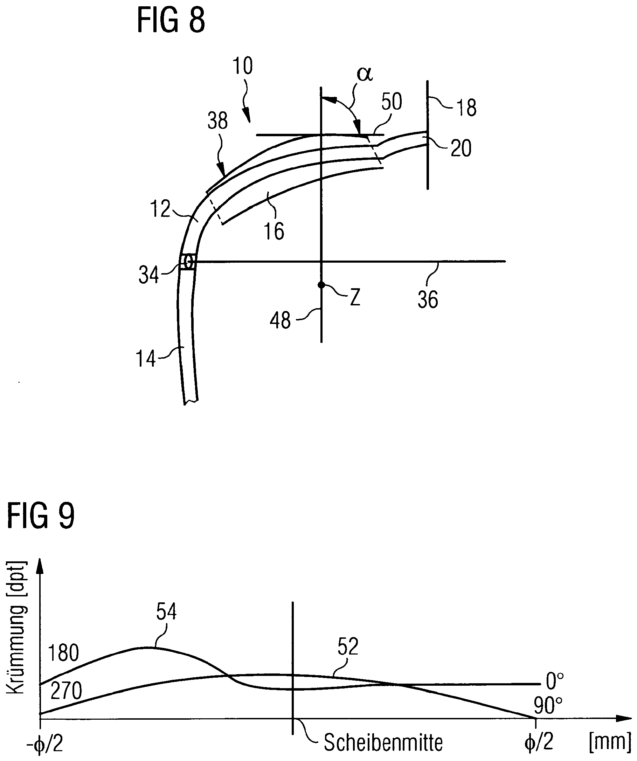

Ferner ist in **Figur 8****,** analog zu Figur 5, eine Aufsicht der bevorzugten Ausführungsform der Brille 10 beispielhaft dargestellt. In Figur 8 ist ferner die Symmetrieebene 18 als Linie dargestellt. Die Symmetrieebene 18 ist beispielsweise senkrecht zu der Zeichenebene. Anhand der Symmetrieebene 18 ist die Brillenfassung 12 achsensymmetrisch. Weiterhin ist in Figur 8 eine Nullblickrichtung 48 eines Benutzers (nicht gezeigt) schematisch dargestellt. Die Nullblickrichtung 48 schließt mit einer Tangente 50 der bildseitigen Fläche 38 des Brillenglases 16 einen Winkel α ein. Ferner ist in Figur 8 die Linie 36 eingezeichnet, welche zu der zweiten linken Ebene 28 bzw. einer der zweiten linken Ebenen und/oder zu der zweiten rechten Ebene bzw. einer der zweiten rechten Ebenen parallel sein kann. Ferner kann die Linie 36 zu einer zweiten linken Ebene und/oder zu einer zweiten rechten Ebene senkrecht sein. Die Linie 36 verbindet die beiden Gelenke bzw. Scharniere 34. Insbesondere verbindet die Linie 36 jeweils die geometrischen Schwerpunkte bzw. Massenschwerpunkte der Gelenke bzw. Scharniere 34. In Figur 8 ist lediglich ein Scharnier bzw. Gelenk 34 beispielhaft dargestellt.

**Figur 9** zeigt, analog zu Figur 6, die Krümmung bzw. die Durchbiegung der objektseitigen Fläche 38 des linken Brillenglases 16. Analog zu Figur 6 ist die Abmessung des Brillenglases auf der horizontalen Achse dargestellt und die Krümmung auf der vertikalen Achse. Auf der horizontalen Achse ist die Scheibenmitte eingezeichnet. Die Abmessung des Brillenglases ist, ausgehend von der Scheibenmitte Ø/2 nach rechts und -Ø/2 nach links. Der Schnittpunkt der Achsen ist daher bei -Ø/2.

Insbesondere ist als Linie 52 die Schnittlinie der ersten linken Ebene 26 (gezeigt in Figur 3) mit der objektseitigen Fläche 38 des linken Brillenglases 16 schematisch dargestellt. Zusätzlich ist als Linie 54 die Schnittlinie der zweiten linken Ebene 28 (gezeigt in Figur 3) mit der objektseitigen Fläche 38 des Brillenglases 16 dargestellt. Die Linie 54 zeigt, daß die Krümmung der objektseitigen Fläche 38 temporal, d.h. nahe dem Punkt 180° größer ist und stärker variiert, als nasal, d.h. nahe dem Punkt 0°, an welchem die Krümmung im wesentlichen konstant ist. Ferner ist in Figur 9 die Position der Scheibenmitte, d.h. der Punkt 30 (gezeigt in Figur 3) durch eine Linie dargestellt. Der Punkt 30 kann der geometrische Mittelpunkt des Brillenglases 16 sein oder auch der geometrische Mittelpunkt der Öffnung der Brillenfassung 12, in bzw. an welcher das Brillenglas 16 angeordnet ist.

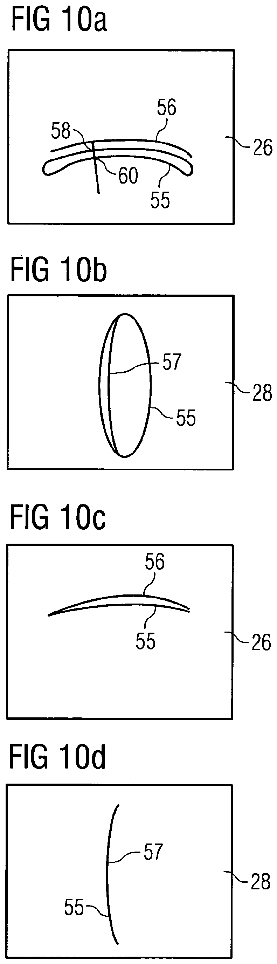

In **Figuren 10a** bis **Figur 10d** ist eine Projektion 55 der Fassungsrandkurve 24 auf die erste und/oder zweite linke Ebene 26, 28 gezeigt. Ferner ist eine Schnittlinie 56, 57 der objektseitigen Fläche 38 mit der ersten und/oder zweiten linken Ebene 26, 28 gezeigt.

Insbesondere zeigt Figur 10a, daß die Schnittlinie 56 außerhalb der Projektion 55 der Fassungsrandkurve 24 liegen kann. Die Fassungsrandkurve 24 ist vorzugsweise eine geschlossene Linie bzw. Kurve bzw. Gebilde im dreidimensionalen Raum. Ebenso ist die Projektion 55 vorzugsweise eine geschlossene Kurve, jedoch im zweidimensionalen Raum, nämlich in der Schnittebene, beispielsweise der ersten linken Ebene 26, der zweiten linken Ebene 28, der ersten rechten Ebene, der zweiten rechten Ebene, usw. Der Abstand der Schnittlinie 56 von der Projektion 55 der Fassungsrandkurve 24 kann anhand einer zu der Schnittlinie 56 senkrechten Geraden bestimmt werden, wobei die Schnittpunkte 58 und 60 dieser Geraden mit der Projektion 55 der Fassungsrandkurve 24 bestimmt werden und der Abstand der Schnittlinie 56 ausgehend von dem Fußpunkt dieser Geraden mit der Schnittlinie zu den Schnittpunkten 58, 60 bestimmbar ist. Ein minimaler oder maximaler Abstand der Schnittlinie 56 von der Projektion 55 der Fassungsrandkurve 24 kann folglich durch Anlegen einer Vielzahl solcher Geraden an die Schnittlinie 56 bestimmt werden.

Die in Figur 10a gezeigte Schnittansicht der objektseitigen Fläche 38 des linken Brillenglases 16 ragt in der Schnittansicht der der ersten linken Ebene 26 über die Projektion der augenseitigen Seite der Brillenfassung 12 bzw. der Fassungsrandkurve 24 auf die erste linke Ebene 26 hinaus.

Figur 10b zeigt, analog zu Figur 10a, eine Projektion 55 der Fassungsrandkurve 24 auf die zweite linke Ebene 28. Analog, wie in Figur 10a, ist die Projektion 55 der Fassungsrandkurve 24 eine geschlossene Kurve. Jedoch liegt die Schnittlinie 57 innerhalb dieser Kurve. In anderen Worten ragt die Brillenfassung 12 (nicht gezeigt) über die objektseitige Fläche 38 des Brillenglases 16 hinaus.

Figur 10c zeigt die Projektion 55 der Fassungsrandkurve 24 auf die erste linke Ebene 26 als Linie. In anderen Worten kann die Brillenfassung 12 beispielsweise eine Brillenfassung 12 sein, welche das Brillenglas 16 nicht vollständig umgibt. Die Brillenfassung 12 kann z.B. eine "Halbrand" Brillenfassung sein. Die Brillenfassung 12 kann aber auch bezüglich der ersten linken Ebene 26 symmetrisch sein. Die Schnittlinie 56 der objektseitigen Fläche 38 des Brillenglases 16 liegt vor der Projektion der Fassungsrandkurve 24, d.h. die objektseitige Fläche 38 ragt über die Brillenfassung 12 hinaus.

In Figur 10d ist die Projektion 55 der Fassungsrandkurve 24 auf die zweite linke Ebene 28 dargestellt. Ebenso ist die Schnittlinie 57 der zweiten linken Ebene 28 mit der objektseitigen Fläche 38 des Brillenglases 16 dargestellt. Die beiden Linien 24, 57 liegen aufeinander bzw. überlappen einander. Insbesondere ist es möglich, daß die Schnittlinie 56 identisch mit der Projektion 55 der Fassungsrandkurve 24 auf die zweite linke Ebene 28 ist.

Die obigen Ausführungen, insbesondere die Ausführungen zu den Figuren 10a bis 10d gelten in analoger Weise für eine Vielzahl erster linker Ebenen, eine Vielzahl erster rechter Ebenen, eine Vielzahl zweiter linker Ebenen und/oder einer Vielzahl zweiter rechter Ebenen. Insbesondere können die Ausführung zu der ersten linken Ebene 26 für eine Vielzahl zweiter linker Ebenen 28, erster rechter Ebenen und zweiter rechter Ebenen angewandt werden. Analoges gilt für die Ausführungen gemäß Figuren 10b, 10c und 10d, welche für alle ersten linken Ebenen, alle ersten rechten Ebenen, alle zweiten linken Ebenen und alle zweiten rechten Ebenen gelten können.

### Bezugszeichenliste

- 10: Brille
- 12: Brillenfassung
- 14: Bügel
- 16: linkes Brillenglas
- 17: rechtes Brillenglas
- 18: Symmetrieebene
- 20: Brücke
- 22: augenseitige Fläche
- 24: Fassungsrandkurve / linke Fassungsrandkurve
- 26: erste linke Ebene
- 28: zweite linke Ebene
- 30: Schnittpunkt
- 32: Linien
- 34: Scharnier/Gelenk
- 36: Linie
- 38: objektseitige Fläche
- 40: Seite der Brillenfassung
- 42: Linie
- 44: Linie
- 46: Linie
- 48: Nullblickrichtung
- 50: Tangente
- 52: Linie
- 54: Linie
- 55: Projektion einer Fassungsrandkurve
- 56: erste linke Schnittlinie
- 57: zweite linke Schnittlinie
- 58: Schnittpunkt
- 60: Schnittpunkt
- 112: Brillenfassung
- 124: Fassungsrandkurve
- 116: Brillenglas
- 126: Ebene
- 155: Projektion einer Fasungsrandkurve
- 162: Nut
- 164: Rand
- 166: Projektionsstrahlen
- 168: Linie
- 170: Berührpunkt
- 172: Schnittpunkt

## Patentansprüche

1. Verfahren zum Herstellen einer Brille (10) mit einer Brillenfassung (12) und einem daran angeordneten ersten progressiven Brillenglas, nachfolgend als linkes Brillenglas (16) bezeichnet, und einem daran angeordneten zweiten progressiven Brillenglas, nachfolgend als rechtes Brillenglas (17) bezeichnet, mit den folgenden Schritten:
- Bestimmen, insbesondere Vermessen einer ersten Fassungsrandkurve (24) der Brillenfassung (12), nachfolgend als linke Fassungsrandkurve (24) bezeichnet, welche ausgebildet ist, das an der Brillenfassung (12) angeordnete linke Brillenglas (16) zumindest teilweise zu umgrenzen;
- Bestimmen, insbesondere Berechnen einer objektseitigen Fläche (38) des linken Brillenglases (16), daß die objektseitige Fläche (38) des linken Brillenglases (16) derart ausgebildet ist, daß
-- eine erste linke Ebene (26) die objektseitige Fläche (38) des linken Brillenglases (16) entlang einer ersten linken Schnittlinie (56) schneidet,
-- die erste linke Schnittlinie (56) von einer Projektion (55) der linken Fassungsrandkurve (24) auf die erste linke Ebene (26) einen maximalen Abstand und einen minimalen Abstand aufweist,
-- die Differenz zwischen dem maximalen Abstand und dem minimalen Abstand geringer als ein vorgegebener Grenzwert ist, wobei
-- der vorgegebene Grenzwert etwa 3 mm, bevorzugt etwa 1 mm, bevorzugt etwa 0,2 mm, besonders bevorzugt etwa 0,1 mm ist,
-- die erste linke Ebene (26) parallel zu einer Symmetrieebene (18) der Brillenfassung (12) ist und das linke Brillenglas (16) in einem vorgegebenen Schnittpunkt schneidet und wobei
-- der vorgegebene Schnittpunkt ein Punkt aus der Menge der folgenden Punkte des linken Brillenglases (16) ist:
Zentrierpunkt, Prismenzentrierpunkt, Anpaßpunkt, Fernbezugspunkt, Nahbezugspunkt, geometrischer Mittelpunkt (30) des linken Brillenglases im Kastenmaß oder ein vorgegebener Symmetriebezugspunkt; wobei der Zentrierpunkt ein Punkt ist, mit dem der optische Mittelpunkt, der Konstruktionsbezugspunkt oder der Anpaßpunkt zusammenfällt oder zusammenfallen, wenn ein verordnendes Prisma oder ein Dickenreduktionsprisma fehlt oder wenn solche Prismen neutralisiert sind;
der Prismenzentrierpunkt ein Punkt ist, in oder an dem prismatische Wirkungen zu bestimmen sind;
der Anpaßpunkt ein vorgegebener Punkt des Brillenglases (16) zum Positionieren des Brillenglases (16) in der Brillenfassung (12) ist;
der Fernbezugspunkt ein Punkt ist, in oder an dem die dioptrische Wirkung für ein Fernteil zum Sehen in die Ferne erreicht wird;
der Nahbezugspunkt ein Punkt ist, in oder an dem eine dioptrische Wirkung für ein Nahteil zum Sehen in die Nähe erreicht wird;
- Bestimmen, insbesondere Berechnen der augenseitigen Fläche (22) des linken Brillenglases (16) derart, daß das linke Brillenglas (16) vorgegebene optische Eigenschaften aufweist.

2. Verfahren nach Anspruch 1, mit dem weiteren Schritt:
- Bestimmen bzw. Vorgeben des zumindest einen Schnittpunktes, und/oder
- Bestimmen bzw. Vorgeben der zumindest einen ersten linken Ebene (26), und/oder
- Bestimmen bzw. Berechnen der Projektion (55) der Fassungsrandkurve (24) auf die zumindest eine erste linke Ebene (26), und/oder
- Bestimmen bzw. Messen bzw. Berechnen der zumindest einen ersten linken Schnittlinie (56) der ersten linken Ebene (26) mit der objektseitigen Fläche (38) des linken Brillenglases (16), und/oder
- Bestimmen bzw. Messen bzw. Berechnen des maximalen Abstands und des minimalen Abstands der erste linke Schnittlinie (56) von der Projektion (55) der linken Fassungsrandkurve (24) auf die erste linke Ebene (26), und/oder
- Bestimmen bzw. Messen bzw. Berechnen der Differenz zwischen dem maximalen Abstand und dem minimalen Abstand, und/oder
- Bestimmen bzw. Vorgeben des Grenzwertes bzw. der Größe des Grenzwertes.

3. Verfahren nach einem der Ansprüche 1 oder 2, wobei die objektseitige Fläche (38) des linken Brillenglases (16) derart bestimmt, insbesondere berechnet wird, daß:
- eine zweite linke Ebene (28) die objektseitige Fläche (38) des linken Brillenglases (16) entlang einer zweiten linken Schnittlinie (57) schneidet,
- die zweite linke Schnittlinie (57) von einer Projektion (55) der linken Fassungsrandkurve (24) auf die zweite linke Ebene (26) einen maximalen Abstand und einen minimalen Abstand aufweist,
- die Differenz zwischen dem maximalen Abstand und dem minimalen Abstand geringer als ein vorgegebener Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- die zweite linke Ebene (28) senkrecht zu der ersten linken Ebene (26) ist und einen Normalenvektor zu der ersten linken Schnittlinie (56) in dem bzw. durch den vorgegebenen Schnittpunkt beinhaltet, und/oder
wobei die objektseitige Fläche (38) des linken Brillenglases (16) derart bestimmt, insbesondere berechnet wird, daß
- voneinander verschiedene erste linke Ebenen die objektseitige Fläche (38) des linken Brillenglases (16) entlang voneinander verschiedener erster linker Schnittlinien schneiden,
- jede erste linke Schnittlinie (56) von einer Projektion (55) der linken Fassungsrandkurve (24) auf die entsprechende erste linke Ebene (26) einen maximalen Abstand und einen minimalen Abstand aufweist,
- die Differenz zwischen dem maximalen Abstand und dem minimalen Abstand geringer als ein vorgegebenen Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- jede erste linke Ebene (26) parallel zu der Symmetrieebene (18) der Brillenfassung (12) ist und jeweils das linke Brillenglas (16) in einem vorgegebenen Schnittpunkt schneidet und wobei
- der vorgegebene Schnittpunkt ein Punkt aus der Menge der folgenden Punkte des linken Brillenglases (16) ist:
Zentrierpunkt, Prismenzentrierpunkt, Anpaßpunkt, Fernbezugspunkt, Nahbezugspunkt, geometrischer Mittelpunkt (30) des linken Brillenglases im Kastenmaß oder ein vorgegebener Symmetriebezugspunkt, und/oder
wobei die objektseitige Fläche (38) des linken Brillenglases (16) derart bestimmt, insbesondere berechnet wird, daß
- voneinander verschiedene zweite linke Ebenen die objektseitige Fläche (38) des linken Brillenglases (16) entlang voneinander verschiedener zweiter linker Schnittlinien schneiden
- jede zweite linke Schnittlinie (57) von einer Projektion (55) der linken Fassungsrandkurve (24) auf die entsprechende zweite linke Ebene (26) einen maximalen Abstand und einen minimalen Abstand aufweist,
- die Differenz zwischen dem maximalen Abstand und dem minimalen Abstand geringer als ein vorgegebener Grenzwert ist, wobei
-- der vorgegebene Grenzwert etwa 3 mm, bevorzugt etwa 1 mm, bevorzugt etwa 0,2 mm, besonders bevorzugt etwa 0,1 mm ist,
- jede zweite linke Ebene (28) senkrecht zu der bzw. den ersten linken Ebene(n) (26) ist und einen Normalenvektor zu einer der ersten linken Schnittlinie (56) in dem durch den vorgegebenen Schnittpunkt beinhaltet.

4. Verfahren nach einem der Ansprüche 1 bis 3, mit den weiteren Schritten,
- Bestimmen, insbesondere Vermessen einer zweiten Fassungsrandkurve der Brillenfassung (12), nachfolgend als rechte Fassungsrandkurve bezeichnet, welche ausgebildet ist, das an der Brillenfassung (12) angeordnete rechte Brillenglas (17) zumindest teilweise zu umgrenzen;
- Bestimmen, insbesondere Berechnen einer objektseitigen Fläche des rechten Brillenglases (17), daß die objektseitige Fläche des rechten Brillenglases (17) derart ausgebildet ist, daß
-- eine erste rechte Ebene die objektseitige Fläche des rechten Brillenglases (17) entlang einer ersten rechten Schnittlinie schneidet,
-- die erste rechte Schnittlinie von einer Projektion der rechten Fassungsrandkurve auf die erste rechte Ebene einen maximalen Abstand und einen minimalen Abstand aufweist,
-- die Differenz zwischen dem maximalen Abstand und dem minimalen Abstand geringer als ein vorgegebener Grenzwert ist, wobei
-- der vorgegebene Grenzwert etwa 3 mm, bevorzugt etwa 1 mm, bevorzugt etwa 0,2 mm, besonders bevorzugt etwa 0,1 mm ist,
-- die erste rechte Ebene parallel zu einer Symmetrieebene (18) der Brillenfassung (12) ist und die objektseitige Fläche des rechten Brillenglases (17) in einem vorgegebenen Schnittpunkt schneidet und wobei
-- der vorgegebene Schnittpunkt ein Punkt aus der Menge der folgenden Punkte des rechten Brillenglases (17) ist:
Zentrierpunkt, Prismenzentrierpunkt, Anpaßpunkt, Fernbezugspunkt, Nahbezugspunkt, geometrischer Mittelpunkt (30) des rechten Brillenglases im Kastenmaß oder ein vorgegebener Symmetriebezugspunkt.
- Bestimmen, insbesondere Berechnen der augenseitigen Fläche des rechten Brillenglases (17) derart, daß das rechte Brillenglas (17) vorgegebene optische Eigenschaften aufweist.

5. Verfahren nach Anspruch 4, wobei die objektseitige Fläche des rechten Brillenglases (17) derart bestimmt, insbesondere berechnet wird, daß:
- eine zweite rechte Ebene die objektseitige Fläche des rechten Brillenglases (17) entlang einer zweiten rechten Schnittlinie schneidet,
- die zweite rechte Schnittlinie von einer Projektion der rechten Fassungsrandkurve auf die zweite rechte Ebene einen maximalen Abstand und einen minimalen Abstand aufweist,
- die Differenz zwischen dem maximalen Abstand und dem minimalen Abstand geringer als ein vorgegebener Grenzwert ist, wobei
- der vorgegebene Grenzwert etwa 3 mm, bevorzugt etwa 1 mm, bevorzugt etwa 0,2 mm, besonders bevorzugt etwa 0,1 mm ist,
- die zweite rechte Ebene senkrecht zu der ersten rechten Ebene ist und einen Normalenvektor zu der ersten rechte Schnittlinie in dem bzw. durch den vorgegebenen Schnittpunkt beinhaltet.

6. Computerprogrammprodukt, welches, wenn geladen in den Speicher eines Computers und ausgeführt von einem Computer ein Verfahren nach einem der Ansprüche 1 bis 5 durchführt.

## Claims

1. A method for producing a pair of spectacles (10) having a spectacle frame (12) and a first progressive spectacle lens arranged thereon, hereinafter referred to as left spectacle lens (16), and a second progressive spectacle lens arranged thereon, hereinafter referred to as right spectacle lens (17), with the following steps:
- Determining, in particular measuring a first frame edge curve (24) of the spectacle frame (12), hereinafter referred to as left frame edge curve (24), which is designed to at least partially surround the left lens (16) arranged on the spectacle frame (12);
- Determining, in particular calculating an object-side surface (38) of the left spectacle lens (16), that the object-side surface (38) of the left spectacle lens (16) is designed such that
-- a first left plane (26) intersects the object-side surface (38) of the left lens (16) along a first left cutting line (56),
-- the first left cutting line (56) has a maximum distance and a minimum distance from a projection (55) of the left frame edge curve (24) on the first left plane (26),
-- the difference between the maximum distance and the minimum distance is less than a predetermined limit value, wherein
-- the predetermined limit value is about 3 mm, preferably about 1 mm, preferably about 0.2 mm, particularly preferably about 0.1 mm,
-- the first left plane (26) is parallel to a plane of symmetry (18) of the spectacle frame (12) and the left lens (16) intersects at a predetermined intersection and wherein
-- the predetermined intersection is a point from the set of the following points of the left lens (16):
Centering point, prism centering point, fitting point, distance reference point, near reference point, geometric center point (30) of the left lens in the box dimension or a predetermined symmetry reference point; wherein
the centering point is a point with which the optical center, the construction reference point or the fitting point coincide or coincide when a prescribing prima or a thickness reduction prism is absent or when such prisms are neutralized;
the prism centering point is a point in or at which prismatic effects are to be determined;
the fitting point is a predetermined point of the spectacle lens (16) for positioning the spectacle lens (16) in the spectacle frame (12);
the distance reference point is a point in or at which a dioptric effect is achieved for a remote portion for remote vision;
the near reference point is a point in or at which a dioptric effect is achieved for a near portion for near vision;
- Determining, in particular, calculating the eye-side surface (22) of the left lens (16) such that the left lens (16) has predetermined optical properties.

2. The method according to claim 1, with the further step:
- Determining or predetermining the at least one point of intersection, and / or
- Determining or predetermining the at least one first left plane (26), and / or
- Determining or calculating the projection (55) of the frame edge curve (24) on the at least one first left plane (26), and / or
- Determining or measuring or calculating the at least one first left cutting line (56) of the first left plane (26) with the object-side surface (38) of the left spectacle lens (16) and / or
- Determining or measuring or calculating the maximum distance and the minimum distance of the first left cutting line (56) from the projection (55) of the left frame edge curve (24) on the first left plane (26), and / or
- Determining or measuring or calculating the difference between the maximum distance and the minimum distance, and / or
- Determining or specifying the limit value or the size of the limit value.

3. The method according to any one of claims 1 or 2, wherein the object-side surface (38) of the left lens (16) is determined in such way, in particular calculated that:
- a second left plane (28) intersects the object-side surface (38) of the left lens (16) along a second left cutting line (57),
- the second left cutting line (57) has a maximum distance and a minimum distance from a projection (55) of the left frame edge curve (24) on the second left plane (26),
- the difference between the maximum distance and the minimum distance is less than a predetermined limit value, wherein
- the predetermined limit value is about 3 mm, preferably about 1 mm, preferably about 0.2 mm, particularly preferably about 0.1 mm,
- the second left plane (28) is perpendicular to the first left plane (26) and includes a normal vector to the first left cutting line (56) in the predetermined intersection, and / or
wherein the object-side surface (38) of the left lens (16) is determined, in particular calculated, in such way that
- mutually different first left planes intersect the object-side surface (38) of the left lens (16) along mutually different first left cutting lines,
- each first left cutting line (56) has a maximum distance and a minimum distance from a projection (55) of the left frame edge curve (24) on the corresponding first left plane (26),
- the difference between the maximum distance and the minimum distance is less than a predetermined limit value, wherein
- the predetermined limit value is about 3 mm, preferably about 1 mm, preferably about 0.2 mm, particularly preferably about 0.1 mm,
- each first left plane (26) is parallel to the plane of symmetry (18) of the spectacle frame (12) and each intersects the left lens (16) at a predetermined intersection and wherein
- the predetermined intersection is a point from the set of the following points of the left lens (16):
Centering point, prism centering point, fitting point, distance reference point, near reference point, geometric center point (30) of the left lens in box dimension or a predetermined symmetry reference point, and / or
wherein the object-side surface (38) of the left lens (16) is determined, in particular calculated, in such way that
- mutually different second left planes intersect the object-side surface (38) of the left lens (16) along mutually different second left cutting lines
- each second left cutting line (57) has a maximum distance and a minimum distance from a projection (55) of the left frame edge curve (24) on the corresponding second left plane (26),
- the difference between the maximum distance and the minimum distance is less than a predetermined limit value, wherein
- the predetermined limit value is about 3 mm, preferably about 1 mm, preferably about 0.2 mm, particularly preferably about 0.1 mm,
- every second left plane (28) is perpendicular to the first left plane (s) (26) and includes a normal vector to one of the first left cutting line (56) through the predetermined intersection.

4. The method according to any one of claims 1 to 3, with the further steps,
- Determining, in particular measuring a second frame edge curve of the spectacle frame (12), hereinafter referred to as the right frame edge curve, which is adapted to surround the right lens (17), which is arranged at the spectacle frame (12) at least partially;
- Determining, in particular calculating an object-side surface of the right lens (17), that the object-side surface of the right lens (17) is formed such that
-- a first right plane intersects the object-side surface of the right lens (17) along a first right cutting line,
-- the first right cutting line has a maximum distance and a minimum distance from a projection of the right frame edge curve on the first right plane,
-- the difference between the maximum distance and the minimum distance is less than a predetermined limit value, wherein
-- the predetermined limit value is about 3 mm, preferably about 1 mm, preferably about 0.2 mm, particularly preferably about 0.1 mm,
-- the first right plane is parallel to a plane of symmetry (18) of the spectacle frame (12) and the object-side surface of the right lens (17) intersects at a predetermined intersection and wherein
-- the predetermined intersection is a point from the set of the following points of the right spectacle lens (17):
Centering point, prism centering point, fitting point, far reference point, near reference point, geometric center point (30) of the right lens in the box dimension or a predetermined symmetry reference point.
- Determining, in particular, calculating the eye-side surface of the right lens (17) such that the right lens (17) has predetermined optical properties.

5. The method according to claim 4, wherein the object-side surface of the right lens (17) is determined, in particular calculated, such that:
- a second right plane intersects the object-side surface of the right lens (17) along a second right cutting line,
- the second right cutting line has a maximum distance and a minimum distance from a projection of the right frame edge curve to the second right plane,
- the difference between the maximum distance and the minimum distance is less than a predetermined limit value, wherein
- the predetermined limit value is about 3 mm, preferably about 1 mm, preferably about 0.2 mm, particularly preferably about 0.1 mm,
- the second right plane is perpendicular to the first right plane and includes a normal vector to the first right cutting line in the predetermined intersection.

6. A computer program product which, when loaded into the memory of a computer and executed by a computer, performs a method according to any one of claims 1 to 5.

## Revendications

1. Procédé de fabrication d'une paire de lunettes (10) comportant une monture de lunettes (12) et un premier verre de lunettes progressif disposé dessus, ci-après appelé lentille gauche (16), et un second verre de lunettes progressif disposé dessus, ci-après appelé lentille droite (17), avec les étapes suivantes:
- déterminer, notamment en mesurant une première courbe de bord de cadre (24) de la monture de lunettes (12), appelée ci-après courbe de bord de cadre gauche (24), qui est conçue pour entourer au moins partiellement la lentille gauche (16) agencée la monture de lunettes (12);
- déterminer, notamment en calculant une surface côté objet (38) de la lentille gauche (16), que la surface côté objets (38) de la lentille gauche (16) est conçue pour que
-- un premier plan gauche (26) coupe la surface côté objet (38) de la lentille gauche (16) le long d'une première ligne de coupe gauche (56),
-- la première ligne de coupe gauche (56) a une distance maximale et une distance minimale par rapport à une projection (55) de la courbe d'arête gauche du cadre (24) sur le premier plan gauche (26),
-- la différence entre la distance maximale et la distance minimale est inférieure à une valeur limite prédéterminée, dans laquelle
-- la valeur limite prédéterminée est d'environ 3 mm, de préférence d'environ 1 mm, de préférence d'environ 0,2 mm, de manière particulièrement préférée d'environ 0,1 mm,
-- le premier plan gauche (26) est parallèle à un plan de symétrie (18) de la monture de lunettes (12) et la lentille gauche (16) se croise à une intersection prédéterminée et dans laquelle
-- l'intersection prédéterminée est un point de l'ensemble des points suivants de la lentille gauche (16):
Point de centrage, point de centrage du prisme, point de montage, point de référence de distance, point de référence proche, point central géométrique (30) de la lentille gauche dans la dimension de la boîte ou point de référence de symétrie prédéterminé; où
le point de centrage est un point avec lequel le centre optique, le point de référence de construction ou le point de montage coïncident ou coïncide en l'absence de prima de prescription ou de prisme de réduction d'épaisseur ou en cas de neutralisation de tels prismes;
le point de centrage du prisme est un point dans lequel ou à lequel les effets prismatiques doivent être déterminés;
le point de montage est un point prédéterminé de la lentille (16) pour positionner la lentille (16) dans la monture de lunettes (12);
le point de référence de distance est un point dans ou auquel un effet dioptrique est obtenu pour une partie éloignée pour une vision distante;
le point de référence proche est un point dans ou auquel un effet dioptrique est obtenu pour une partie proche de la vision de près;
- déterminer, en particulier, calculer la surface côté œil (22) de la lentille gauche (16) de telle sorte que la lentille gauche (16) présente des propriétés optiques prédéterminées.

2. Procédé selon la revendication 1, avec l'étape suivante:
- déterminer ou prédéterminer au moins un point d'intersection, et / ou
- déterminer ou prédéterminer l'au moins un premier plan gauche (26), et / ou
- déterminer ou calculer la projection (55) de la courbe de bord du cadre (24) sur le au moins un premier plan gauche (26), et / ou
- déterminer, mesurer ou calculer au moins une première ligne de coupe gauche (56) du premier plan gauche (26) avec la surface côté objet (38) de la lentille gauche (16) et / ou
- déterminer ou mesurer ou calculer la distance maximale et la distance minimale de la première ligne de coupe gauche (56) par rapport à la projection (55) de la courbe de bord gauche du cadre (24) sur le premier plan gauche (26), et / ou
- déterminer ou mesurer ou calculer la différence entre la distance maximale et la distance minimale, et/ou
- déterminer ou spécifier de la valeur limite ou de la taille de la valeur limite.

3. Procédé selon l'une quelconque des revendications 1 ou 2, dans lequel la surface côté objet (38) de la lentille gauche (16) est déterminée de telle manière, en particulier calculée que:
- un deuxième plan gauche (28) coupe la surface côté objet (38) de la lentille gauche (16) le long d'une deuxième ligne de coupe gauche (57),
- la seconde ligne de coupe gauche (57) a une distance maximale et une distance minimale par rapport à une projection (55) de la courbe d'arête gauche du cadre (24) sur le second plan gauche (26),
- la différence entre la distance maximale et la distance minimale est inférieure à une valeur limite prédéterminée, dans laquelle
- la valeur limite prédéterminée est d'environ 3 mm, de préférence d'environ 1 mm, de préférence d'environ 0,2 mm, de manière particulièrement préférée d'environ 0,1 mm,
- le deuxième plan gauche (28) est perpendiculaire au premier plan gauche (26) et comprend un vecteur normal à la première ligne de coupe gauche (56) dans l'intersection prédéterminée, et / ou dans lequel la surface côté objet (38) de la lentille gauche (16) est déterminée, en particulier calculée, de telle sorte que
- des premiers plans gauche mutuellement différents coupent la surface côté objet (38) de la lentille gauche (16) le long de premières lignes de coupe gauche mutuellement différentes,
- chaque première ligne de coupe gauche (56) a une distance maximale et une distance minimale par rapport à une projection (55) de la courbe d'arête gauche du cadre (24) sur le premier plan gauche correspondant (26),
- la différence entre la distance maximale et la distance minimale est inférieure à une valeur limite prédéterminée, dans laquelle
- la valeur limite prédéterminée est d'environ 3 mm, de préférence d'environ 1 mm, de préférence d'environ 0,2 mm, de manière particulièrement préférée d'environ 0,1 mm,
- chaque premier plan gauche (26) est parallèle au plan de symétrie (18) de la monture de lunettes (12) et intersecte la lentille gauche (16) à une intersection prédéterminée et dans lequel
- l'intersection prédéterminée est un point de l'ensemble des points suivants de la lentille gauche (16):
Point de centrage, point de centrage du prisme, point de montage, point de référence de distance, point de référence proche, point central géométrique (30) de la lentille gauche dans une dimension de boîte ou un point de référence de symétrie prédéterminé, et / ou
dans lequel la surface côté objet (38) de la lentille gauche (16) est déterminée, en particulier calculée, de telle sorte que
- des deuxièmes plans gauche mutuellement différents croisent la surface côté objet (38) de la lentille gauche (16) le long de deuxièmes lignes de coupe gauche mutuellement différentes
- chaque seconde ligne de coupe gauche (57) a une distance maximale et une distance minimale par rapport à une projection (55) de la courbe de bord gauche du cadre (24) sur le second plan gauche correspondant (26),
- la différence entre la distance maximale et la distance minimale est inférieure à une valeur limite prédéterminée, dans laquelle
- la valeur limite prédéterminée est d'environ 3 mm, de préférence d'environ 1 mm, de préférence d'environ 0,2 mm, de manière particulièrement préférée d'environ 0,1 mm,
- chaque deuxième plan gauche (28) est perpendiculaire au (x) premier (x) plan (s) gauche (s) (26) et comprend un vecteur normal à l'une des premières lignes de coupe gauche (56) passant par l'intersection prédéterminée.

4. Procédé selon l'une quelconque des revendications 1 à 3, avec les étapes suivantes,
- déterminer, en particulier mesurer une deuxième courbe de bord de la monture de lunettes (12), appelée ci-après courbe de bord de monture droite, qui est adaptée pour entourer la lentille droite (17), qui est disposée au niveau de la monture de lunettes (12) au moins partiellement;
- déterminer, en particulier calculer une surface côté objectif de la lentille droite (17), que la surface côté objet de la lentille droite (17) est formée de telle sorte que
-- un premier plan droit coupe la surface côté objectif de la lentille droite (17) le long d'une première ligne de coupe droite,
-- la première ligne de coupe droite présente une distance maximale et une distance minimale par rapport à une projection de la courbe du bord droit du cadre dans le premier plan,
-- la différence entre la distance maximale et la distance minimale est inférieure à une valeur limite prédéterminée, dans laquelle
-- la valeur limite prédéterminée est d'environ 3 mm, de préférence d'environ 1 mm, de préférence d'environ 0,2 mm, de manière particulièrement préférée d'environ 0,1 mm,
-- le premier plan droit est parallèle à un plan de symétrie (18) de la monture de lunettes (12) et la surface de la lentille droite (17) côté objet se croise à une intersection prédéterminée et dans laquelle
-- l'intersection prédéterminée est un point de l'ensemble des points suivants du verre de lunettes droit (17):
Point de centrage, point de centrage du prisme, point de montage, point de référence éloigné, point de référence proche, point central géométrique (30) de la lentille droite dans la dimension de la boîte ou point de référence de symétrie prédéterminé.
- déterminer, en particulier calculer la surface du côté de l'oeil de la lentille droite (17) de sorte que la lentille droite (17) présente des propriétés optiques prédéterminées.

5. Procédé selon la revendication 4, **caractérisé en ce que** la surface côté objet de la lentille droite (17) est déterminée, notamment calculée, de telle sorte que:
- un deuxième plan droit coupe la surface côté objectif de la lentille droite (17) le long d'une deuxième ligne de coupe droite,
- la deuxième ligne de coupe droite a une distance maximale et une distance minimale entre une projection de la courbe du bord droit du cadre et le deuxième plan droit,
- la différence entre la distance maximale et la distance minimale est inférieure à une valeur limite prédéterminée, dans laquelle
- la valeur limite prédéterminée est d'environ 3 mm, de préférence d'environ 1 mm, de préférence d'environ 0,2 mm, de manière particulièrement préférée d'environ 0,1 mm,
- le deuxième plan droit est perpendiculaire au premier plan droit et comprend un vecteur normal à la première ligne de coupe droite dans l'intersection prédéterminée.

6. Produit programme d'ordinateur qui, lorsqu'il est chargé dans la mémoire d'un ordinateur et exécuté par un ordinateur, exécute un procédé selon l'une quelconque des revendications 1 à 5.
